# EUROPÄISCHE PATENTSCHRIFT

(11) **EP 3 294 488 B1**
(45) Veröffentlichungstag und Bekanntmachung des Hinweises auf die Patenterteilung: **25.03.2020**
(21) Anmeldenummer: 16725591.8
(22) Anmeldetag: 13.05.2016
(51) Int. Cl.: B23K 26/03, B23K 26/38, B23K 26/06, B23K 26/14

(54) **LASERSCHNEIDVORRICHTUNG MIT EINER ÜBERWACHUNGANORDNUNG**
LASER CUTTING DEVICE WITH AN OBSERVATION SYSTEM
DISPOSITIF DE DECOUPE LASER AVEC UN SYSTEME D'OBSERVATION

(30) Priorität: 13.05.2015 EP 15167695
(43) Veröffentlichungstag der Anmeldung: 21.03.2018
(73) Patentinhaber: Bystronic Laser AG, CH-3362 Niederoenz (CH)
(72) Erfinder: BADER, Roland, 4933 Rütschelen (CH); LÜDI, Andreas, 3400 Burgdorf (CH)
(74) Vertreter: Schwarz und Baldus Patentanwälte
(86) Internationale Anmeldenummer: PCT/IB2016/052778
(87) Internationale Veröffentlichungsnummer: WO 2016/181359

(56) Entgegenhaltungen:
- EP-A1- 2 687 317
- WO-A1-2015/036140
- DE-B3-102012 102 785
- US-A- 5 938 953
- US-A1- 2008 000 888

## Beschreibung

Die Erfindung betrifft eine Laserschneidvorrichtung nach dem Oberbegriff des Anspruchs 1 (siehe z.B. WO 2015036140 A1).

Für die Bearbeitung von Werkstücken mit einem Laserstrahl ist eine Vorrichtung mit einer Anordnung zur Erzeugung und Führung eines Arbeitslaserstrahls ausgestattet. Der Laserstrahl wird typischerweise durch eine Öffnung einer Düse zu einer Wechselwirkungszone, resp. Bearbeitungszone geführt. Die Anordnung zur Führung des Arbeitslaserstrahls definiert eine optische Achse und weist zumindest ein fokussierendes Element, beispielsweise eine Fokussier- oder Schneid-Linse, nahe der Öffnung auf.

Eine derartige Laserbearbeitungsvorrichtung ist beispielsweise in der EP 2687317 A1 beschrieben, wobei auch eine Beobachtungsanordnung offenbart ist, welche zur Zentrierung der Düse in Bezug auf den Arbeitslaserstrahl dient, um eine Berührung der Düse durch den Arbeitslaserstrahl zu vermeiden. Eine Beobachtung der Bearbeitungszone ist hingegen nicht vorgesehen und die Detektoranordung ist auch dafür nicht ausgelegt. Die Beobachtungsrichtung der Detektoranordnung muss für die bestmögliche Düsenzentrierung möglichst koaxial erfolgen, wobei allfällige Abweichungen von der Koaxialität - wie dies in den rein schematischen Abbildungen der EP 2687317 A1 zu erkennen ist - notgedrungen daraus folgen, dass einer rein koaxialen Beobachtung der Hochleistungs-Arbeitslaserstrahl im Weg ist. Da dieser aus langwelliger CO2-Strahlung besteht, muss jegliche transmittive oder teildurchlässige Optik in koaxialer Richtung vermieden werden, die nicht zwingend notwendig ist, weshalb gemäss der Lehre der EP 2687317 A1 die Düsenspitze nicht-koaxial beobachtet wird, um jegliche Interaktion mit dem Bearbeitungsstrahl zu vermeiden. Schliesslich muss auch die Detektoranordnung möglichst weit von der Düsenspitze entfernt sein, idealerweise hinter der Fokussierlinse, damit der Polarwinkel für eine optimale Düsenzentrierung möglichst klein ist.

Um derartige Vorrichtungen zur Erzielung des bestmöglichen Bearbeitungsergebnisses steuern zu können oder zumindest ungenügende Bearbeitungsergebnisse feststellen zu können, kann vorteilhafterweise eine Anordnung zur Überwachung des Bearbeitungsvorganges vorgesehen sein.

Über Detektoren und Sensoren wird Strahlung des Bearbeitungsprozesses gemessen, oder mittels einer Kamera werden Bilder der Wechselwirkungs- oder Bearbeitungszone aufgenommen. Dabei werden je nach Anwendung unterschiedliche Teile des ultravioletten oder sichtbaren Lichtspektrums, des nahen oder fernen Infrarots erfasst. Aus den Messwerten werden Qualitätskenngrössen ermittelt, die meistens neben der reinen Überwachung auch für eine Regelung verwendet werden.

In der Literatur werden Detektoren vorgeschlagen, welche die Strahlung aus der Prozesszone koaxial oder konzentrisch (und parallel) zum Bearbeitungslaserstrahl erfassen, entweder mit Fotodetektoren (wie in De Keuster J., Duflou J.R.: Monitoring of high-power CO2 laser cutting by means of an acoustic microphone and photodiodes, International Journal of Advanced Manufacturing Technology 35 (1-2), 115-126, 2007 beschrieben) oder Kamera (wie in Sichani E.F., Duflou J.R.: Monitoring and adaptive control of CO2 laser flame cutting, Physics Procedia 5, Lane 2010 beschrieben). Dabei wird die Prozessstrahlung oberhalb der Fokussieroptik, also im geschützten Innenraum des Bearbeitungskopfs über dichroitische Spiegel oder Umlenk-Lochspiegel resp. Scraperspiegel aus dem Strahlengang des Arbeitslaserstrahls ausgekoppelt. Aufgrund des grossen Abstandes der Fokussieroptik zur Prozesszone und Schneiddüse schränkt deren kleine Öffnung den Sichtbereich quasi auf den Düsendurchmesser ein, und das Winkelspektrum der erfassten Strahlung liegt aufgrund der Apertur der Fokussieroptik bei kleiner 5°.

Bei Flachbettlaserschneidanlagen ist es bekannt, den Prozess auf Plasmabildung zu überwachen. Durch die Erkennung von hellem Plasmalicht anstelle von dunklerem Prozesslicht bei normaler Bearbeitung kann Teileausschuss beim Laserschmelzschneiden (mit Schneidgas Stickstoff) verhindert werden. Dazu wird am oder im Schneidkopf ein Fotodetektor angebracht und dessen Signal auf Überschreiten eines zuvor festgelegten Schwellwerts überwacht. Diese Vorgangsweise ist jedoch nicht anwendbar zur Erkennung von Qualitätsdefekten ohne Plasmabildung, und insbesondere nicht beim kostengünstigen Laserbrennschneiden, welches mit Sauerstoff als Prozessgas funktioniert. Das Laserbrennschneidverfahren kommt überwiegend bei der Bearbeitung von unlegierten Stahlblechen zum Einsatz und macht den grössten Teil der Produktion auf Laserschneidanlagen aus.

Für Laserbrennschneiden sind nur sehr wenige spezialisierte Vorrichtungen und Verfahren bekannt. De Keuster J., Duflou J.R.: Monitoring of high-power CO2 laser cutting by means of an acoustic microphone and photodiodes, International Journal of Advanced Manufacturing Technology 35 (1-2), 115-126, 2007 beschreibt eine Anordnung mit drei umfangsmässig verteilten Fotodioden hinter der Schneidlinse im Schneidkopf, wobei aufgrund des geringen möglichen Abstandes der Fotodioden zur optischen Achse und der Platzierung oberhalb der Schneidlinse eine Erfassung von Strahlung nur in einem kleinen Winkelspektrum möglich ist. Die eindeutige Detektion von Qualitätsdefekten ist damit nicht möglich.

Überwachungsverfahren für Laserbrennschneiden mit ortsaufgelöster Beobachtung der Prozesszone mit einer koaxialen Kamera sind ebenfalls bekannt, wobei aus den Kamerabildern der Wechselwirkungszone mittels digitaler Bildverarbeitung Charakteristika des Prozesses für eine Echtzeitsteuerung berechnet werden. Ein dafür geeignetes Kamerasystem ist in EP 1 886 757 A1 offenbart.

Weiter wird in DE 10 2013 209 526 A1 ein Verfahren offengelegt, welches einen Prozessabriss während dem Laserbrennschneiden detektieren kann. Die Kamerabilder der Prozesszone werden auf das Vorkommen von Schlacketropfen hin analysiert, welche den Prozessabriss anzeigen. Dieser schlimmste aller Qualitätsdefekte beim Laserbrennschneiden ist aber auch mit einem herkömmlichen einfachen Fotodiodensystem und geeigneten Signalverarbeitungsalgorithmen detektierbar. Zudem führt bereits der viel geringere Qualitätsdefekt von Schlackenrückstand im Schnittspalt zu Teileausschuss, was offensichtlich das offengelegte Verfahren nicht detektieren kann.

Der folgende Stand der Technik offenbart sämtlich nicht für Laserbrennschneiden spezialisierte Vorrichtungen und Verfahren, weshalb mit diesen keine entsprechende Überwachung möglich ist. Diese Tatsache wird dadurch untermauert, dass heute kein kommerzielles System verfügbar ist, welches den Laserbrennschneidprozess überwachen kann.

In DE 10 2011 003 717 A1 werden ein Verfahren und eine Vorrichtung offenbart, welche mit einer koaxialen Kamera die Wechselwirkungszone beim Laserschneiden erfassen und mittels Bildverarbeitung verschiedene geometrische Merkmale der Wechselwirkungszone und angrenzende Schnittspaltkanten detektieren. Daraus wird mindestens ein Schneidqualitätskennwert berechnet.

In WO 2012143899 sind ein Verfahren und eine Vorrichtung offenbart, welche den Laserbearbeitungsprozess mit einer Detektoreinheit mit Fotodioden und verschiedenen Wellenlängen-Bandpassfiltern überwacht und regelt. Die Fotodiode liegt seitlich und das Licht aus der Prozesszone von dortigen vorhandenen emittierenden Materialien wird mittels eines nicht-koaxialen Spiegels auf diesen seitlichen (ebenfalls nicht-koaxialen) Detektor geleitet.

In EP 2 357 057 A1 ist ein Verfahren zur Überwachung und Regelung eines Laserbearbeitungsprozesses beschrieben, welches mithilfe von erfassten Detektorsignalen und statistischen Modellen die Schneidqualität bestimmen kann. Aus den Detektorsignalen werden Charakteristiken berechnet, die mit den Charakteristiken eines Referenzschnitts normiert werden. Mithilfe einer Vielzahl von statistischen Modellen wird die Zugehörigkeit des aktuellen Bearbeitungsergebnisses zu einer bestimmten Schneidqualität und einer dazugehörigen Korrekturmassnahme in Form einer Bearbeitungsparameter-Änderung bestimmt.

Die EP 1 275 465 B1 beschreibt ein System zur automatischen Erkennung von schlechter Schneidqualität, insbesondere Grat, ohne Referenzsignale hinterlegen zu müssen. Die Prozessstrahlung wird mit einem teildurchlässigen Spiegel aus dem Arbeitsstrahlengang ausgekoppelt und über ein optisches Filter auf eine Fotodiode geführt. Das Signal wird digital gewandelt und mit einem Bandpassfilter im Hochfrequenzbereich gefiltert. Dadurch kann direkt auf Schlackenrückstand oder Grat geschlossen werden.

In US 7 173 227 B2 wird ein Detektor offenbart, welcher die emittierte Strahlung vom Bearbeitungsprozess misst, um damit die Laserleistung und den Bearbeitungsvorschub regeln zu können. In einer Initialisierungsphase vor der Auslieferung der Maschine wird für jedes Material eine Kennlinie der Laserleistung versus Bearbeitungsqualität aufgenommen. Vor jeder Bearbeitung und regelmässig während der Bearbeitung wird das System automatisch mithilfe einer Kalibrierlichtquelle abgeglichen.

In DE 10 2005 024 085 A1 wird ein Laserbearbeitungskopf mit Kamera und koaxialem Fotodetektor offenbart, zur Überwachung resp. Charakterisierung eines Laserbearbeitungsvorgangs.

In DE102010020183 A1 wird ein Laserschneidkopf offenbart, der mit einer Kamera zur Bestimmung der Schnittspaltbreite ausgerüstet ist. Dabei kann der Schnittspalt auch beleuchtet werden.

In DE 102011 004 117 A1 wird ein Verfahren zur Kontrolle von lasergeschnittenen Werkstücken offenbart. Nach dem Schneiden einer (kleinen) Innenkontur resp. eines Lochs wird der Schneidkopf in deren Mitte positioniert und durch erneutes Einstechen überprüft, ob das Abfallteil herausgefallen ist oder nicht. Falls beim Einstich keine Emissionen entstehen, ist das Loch herausgefallen. Ein ähnliches Verfahren offenbart DE 10 2010 039 525 A1, wonach die Anwesenheitsprüfung der geschnittenen Innenkontur mit dem Abstandssensor der Schneiddüse überprüft wird. Beide Verfahren werden zur Qualitätskontrolle von Lochblechen angewendet, bevor diese weitere Fertigungsschritte durchlaufen.

In US 2004 0195215 wird mithilfe von Laserdistanz-Sensoren die Einschneidtiefe beim Laser-Sublimationsschneiden von Metallen und Verbundwerkstoffen geregelt. Das Verfahren wird vorzugsweise zur Perforierung von Airbag-Verschalungen eingesetzt.

In WO 2010057662 A1 wird ein System offenbart, welches Prozessemissionen mit mindestens zwei Detektoren erfasst. Dabei können akustische Sensoren, Fotodetektoren und eine Kamera zum Einsatz kommen. Aus den originalen Signalen werden mithilfe geeigneter Methoden der statistischen Dimensionsreduktion Charakteristiken berechnet. Mithilfe von Expertenwissen werden Produktionsprozesse wie Laserschweissen assistiert und sogar geregelt.

In WO 2012000650 A1 wird ein System offenbart, welches aus Kamerabildern der Prozesszone die Bearbeitungsqualität mithilfe Verfahren aus der künstlichen Intelligenz klassifiziert und den Produktionsprozess wie z.B. Laserschweissen regelt. Damit wird die Prozesssicherheit und Flexibilität sowie die einfache Operabilität erhöht.

Die WO 2015036140 A1 schliesslich offenbart, in Gegensatz zu den oben erläuterten Lösungen mit reiner Strahlungsdetektion, eine Bilderfassungseinrichtung mit einer einzelnen, aus baulichen Gründen weit oberhalb der Düse und auch der Bearbeitungsoptik positionierten Kamera zur Beobachtung der Bearbeitungszone, um damit ein Bild des Wechselwirkungsbereiches zu erzeugen. Die der Kamera vorgelagerte Abbildungsoptik koppelt mithilfe beispielsweise einer exzentrischen Blende ein exzentrisches Strahlenbündel aus, um entgegen der Bearbeitungsrichtung (d.h. entgegen der Bewegungsrichtung des Laserbearbeitungskopfes, also "schleppend") in den Schnittspalt zu schauen. Dabei wird auch eine platzaufwendige komplexe Abbildungsoptik benötigt, um ein oder mehrere Bilder nichtkoaxial auf die Kamera abzubilden.

Einer der Nachteile einer solchen Anordnung ist es, dass die Kamera hinter der Fokussierlinse für den Arbeitslaserstrahl angeordnet sein muss, was Einschränkungen betreffend des maximalem Sichtwinkels mit sich bringt und damit zur Überwachung insbesondere eines Brennschneidprozesses nicht ausreicht. Mit den Schneidoptiken üblicher Laserbearbeitungsköpfe lässt sich ein Sichtwinkel von maximal 5° erzielen. Demgegenüber ist in der WO 2012000650 A1 von Sichtwinkeln bis 15° die Rede und für den Brennschneidprozess sind ca. 10° erforderlich. Die Konsequenz wäre, dass die Schneid- bzw. Fokussierlinse um mindestens einen Faktor 2 gegenüber den bekannten Ausführungsformen vergrössert werden müsste. Dies ist zwar prinzipiell möglich, führt aber zu einer starken Vergrösserung und massiven Gewichtszunahme des Laserbearbeitungskopfes und erlaubt es daher nicht, schlanke, leichte Laserbearbeitungsköpfe zu bauen, die ein hochdynamisches Laserschneiden ermöglichen. Diese Lösung ist also denkbar untauglich für die praktische industrielle Anwendung.

Eine andere Möglichkeit für eine Vergrösserung des Beobachtungswinkels mit einer im Laserschneidkopf angeordneten Kamera sieht gemäss der WO 2012000650 A1vor, neben der Schneidlinse hindurch auf die Beobachtungszone zu blicken. Dies erscheint jedoch aufgrund der notwendigen Halterung nicht umsetzbar und wird auch gar nicht weiter ausgeführt. Eine nicht erwähnte Möglichkeit, grosse Sichtwinkel zu ermöglichen, besteht darin, eine Kamera samt vorgelagerter Abbildungsoptik mit einem teildurchlässigen schrägen Spiegel unterhalb der Schneid- oder Fokussierlinse einzubauen. Dies ist jedoch aus Gründen wie Verschmutzung, geringem Platzangebot, etc. nicht industrietauglich umsetzbar.

Ein weiterer Nachteil des in der WO 2012000650 A1 offenbarten Verfahrens liegt darin, dass die unter schleppender Beobachtung erfassten Kamerabilder nur sehr wenige ausgeprägte Bildmerkmale enthalten. Entsprechend wird darauf hingewiesen, dass, um Rückschlüsse auf den Winkel der Schneidfront ziehen zu können, bereits die Auswertung der Gesamtbildintensität die wesentliche Information liefert. DE 10 2012 102785 B3 betrifft eine Einrichtung zur Erfassung und Überwachung der Verschmutzung einer optischen Komponente einer Laserbearbeitungsvorrichtung. US 5 938 953 A offenbart eine Laserbearbeitungsvorrichtung, mit einem Laserbearbeitungskopf enthaltend einen Beobachtungskanal, durch den Strahlung vom Werkstück fällt.

Vor diesem Hintergrund ist es eine Aufgabe der vorliegenden Erfindung, eine Laserschneidvorrichtung mit einer Anordnung zur Überwachung eines Laserbrennschneidprozesses bereitzustellen, welche die wesentlichen Qualitätsdefekte, wie z.B. Schlackenrückstand, robust in Echtzeit, während dem Bearbeitungsprozess, detektieren und Teileausschuss verhindern kann. Zudem soll die Vorrichtung auf die speziellen Eigenschaften des Laserbrennschneidens abgestimmt sein.

Es ist eine weitere Aufgabe der vorliegenden Erfindung, eine Laserschneidvorrichtung derart zu verbessern, dass eine möglichst vollständige Erfassung von Strahlung aus der Prozesszone gewährleistet werden kann, um damit eine verbesserte Ermittlung von Qualitätsmerkmalen bereits während des Schneidvorganges bei verschiedensten Laserbearbeitungsmethoden zu ermöglichen.

Die Aufgabe wird durch die Merkmale des unabhängigen Anspruchs gelost. Vorteilhafte Weiterbildungen sind in den Figuren und in den abhängigen Patentansprüchen dargelegt.

Gemäss der Erfindung ist eine eingangs charakterisierte Laserschneidvorrichtung mit zumindest einer Gruppe von Detektoranordnungen ausgestattet, welche für eine für den Bearbeitungsvorgang charakteristischen Strahlung empfindlich sind. Diese Detektoranordnungen sind mit zumindest einer Auswerteeinheit verbunden, wobei die Detektoranordnungen jeder Gruppe ringförmig um die optische Achse herum angeordnet sind. Die Beobachtungsrichtung der Detektoranordnungen - welcher Begriff für den Fall eines beispielsweise kegelförmigen Beobachtungsstrahlenbündels dessen zentrale Achse benennt - ist zumindest in einem Teilbereich zwischen dem der Bearbeitungszone nächstliegenden fokussierenden Element und der Bearbeitungszone unter einem Polarwinkel grösser 5° in Bezug auf die optische Achse des Arbeitslaserstrahls orientiert. Dieser Teilbereich mit einer Beobachtungsrichtung mit grossem Polarwinkel liegt dabei vorzugsweise in einem dem fokussierenden Element entfernteren Teilbereich, insbesondere im Bereich zwischen der Bearbeitungszone und dem unteren Randbereich der Düse. Eine besonders bevorzugte Ausführungsform sieht dabei Beobachtungsrichtungen unter einem Polarwinkel grösser oder gleich 7° vor, insbesondere unter einem Polarwinkel von ca. 10° oder mehr.

Die erfindungsgemässe Anordnung sieht also Strahlungsdetektoranordnungen für eine für den Bearbeitungsvorgang charakteristischen Strahlung vor, welche keinerlei aufwendige, schwere und viel Bauraum beanspruchende bilderzeugende Optiken erfordert, auch keine Apertur-Vergrösserung der Optiken für den Arbeitslaserstrahl erfordert, um die Beobachtung aus grösseren Polarwinkeln zu gestatten, und daher die Laserbearbeitungsköpfe nicht grösser bzw. schwerer macht. Die Überwachungsanordnung findet deshalb in einem marktüblichen Laserschneidkopf problemlos Platz. Die optimale Prozessüberwachung kann online durch Ermittlung der Gesamtintensität der Strahlung aus der Bearbeitungszone durch die Strahlungsdetektoren erfolgen, mit einer sehr hohen zeitlichen Auflösung, die sonst nur mit Hochgeschwindigkeitskameras erreicht werden könnte. Vorzugsweise sind die Detektoranordnungen entlang zumindest eines zur optischen Achse koaxialen und im Wesentlichen senkrechten Kreises angeordnet, um in einfacher Weise eine Beobachtung der Bearbeitungszone aus jeder beliebigen Richtung zu ermöglichen bzw. die Berücksichtigung beliebiger, auch wechselnder Bewegungs- bzw. Vorschubrichtungen zu gestatten, d.h. insbesondere zu jedem Zeitpunkt auf jeden beliebigen Bereich der Bearbeitungszone zu blicken. Damit ist jederzeit auch die Beobachtung des kompletten Schnittspaltes gewährleistet. Insbesondere kann damit die Bearbeitungszone zu jedem beliebigen Zeitpunkt auch schleppend, d.h. entgegen der Bewegungsrichtung des Bearbeitungskopfes betrachtet werden. Dabei können natürlich auch gewisse Abweichungen von Kreisform und/oder Koaxialität der Detektoranordnungen auftreten, wenn es die baulichen Gegebenheiten des jeweiligen Laserbearbeitungskopfes erforderlich machen.

Bevorzugt ist die erfindungsgemässe Laserschneidvorrichtung dadurch gekennzeichnet, dass zumindest ein optisches Zwischenelement für zumindest eine Detektoranordnung, allenfalls die gesamte Detektoranordnung, zwischen dem der Bearbeitungszone nächstliegenden fokussierenden Element und der Bearbeitungszone angeordnet ist. Vorzugsweise ist dieses Zwischenelement als Umlenkanordnung für die Strahlung, insbesondere als Reflektoranordnung oder Spiegel, ausgelegt. Für besondere Anwendungen ist die Anordnung mehrerer untereinanderliegender Spiegelsegmente oder sogar einer gekrümmten Freiformfläche als Umlenkanordnung vorteilhaft. Um sehr grosse Polarwinkel des Beobachtungsstrahlenbündels jenseits 10° zu erreichen, wird als Anbringungsort der Zwischenelemente insbesondere die Innenseite des unteren Randbereichs der Düse vorgesehen bzw. wird dieser Randbereich selbst als Umlenkanordnung, speziell als Reflektor, ausgebildet.

Eine weitere bevorzugte Ausführungsform der Erfindung sieht zumindest eine Detektoranordnung vor, deren Beobachtungsrichtung in einem Bereich des Azimutwinkels von maximal 45° zur Bewegungsrichtung der Düse und entgegen deren Bewegungsrichtung auf die Bearbeitungszone gerichtet ist. Dabei umfasst der Ausdruck «Beobachtungsrichtung» auch die zentrale Achse eines beispielsweise kegelförmigen Beobachtungsstrahlenbündels der Detektoranordnung. Mit dieser Ausführungsform ist jedenfalls die «schleppende» Beobachtung der Bearbeitungszone gewährleistet, wobei insbesondere bei Schneidvorgängen von dicken Blechen ab 8 mm der hintere bzw. untere Bereich der Bearbeitungszone resp. des Schnittspalts beobachtet werden kann, welcher hinter bzw. ausserhalb dem durch die Düse koaxial sichtbaren Bereich liegt.

Vorzugsweise umfasst jede um die optische Achse herum angeordnete Gruppe von Detektoranordnungen mindestens fünf, insbesondere mindestens acht Detektoranordnungen. Diese sind vorteilhafterweise umfangsmässig gleichverteilt um die optische Achse der Anordnung positioniert und gewährleisten eine ausreichende umfangsmässige Auflösung in Azimutrichtung.

Eine weitere vorteilhafte Ausführungsform der Erfindung sieht vor, dass zumindest eine Detektoranordnung einen Detektor sowie zumindest eine Anordnung mit einem optischen Zwischenelement aufweist, vorzugsweise eine Umlenkanordnung. Dabei ist zumindest einer der Detektoren derart gestaltet, dass dieser ein fächerförmiges Beobachtungsstrahlenbündel bezüglich des Polarwinkels aufweist und die Anordnung der einem bestimmten Detektor zugeordneten optischen Zwischenelemente sich betreffend des Polarwinkels unterscheidende Segmente des fächerförmigen Beobachtungsstrahlenbündels dieses Detektors auf denselben Bereich der Bearbeitungszone hin umlenkt. Der Begriff "fächerförmiges" Strahlenbündel soll zum Ausdruck bringen, dass das Beobachtungsfeld der Detektoranordnung, d.h. auch genannt dessen Beobachtungsstrahlen, in zwei orthogonalen Richtungen stark unterschiedlich ist. In weiterer Folge werden die Begriffe "optisches Zwischenelement" und "Reflektoranordnung", "Spiegel", usw. im gleichen technischen Sinn verwendet und können beliebig gegeneinander ausgetauscht werden.

Bevorzugt für die Erfindung sind mehrere Detektoren bzw. Zwischenelemente in im Wesentlichen dem gleichen Azimutwinkel β um die optische Achse vorgesehen, deren Beobachtungsrichtungen aus unterschiedlichen Polarwinkeln auf die Bearbeitungszone hin gerichtet sind. Alternativ dazu könnte auch ein Detektor bzw. eine Umlenkanordnung in im Wesentlichen dem gleichen Azimutwinkel β um die optische Achse zwischen unterschiedlichen Polarwinkeln oszillieren und die Beobachtungsrichtung jeweils aus unterschiedlichen Polarwinkeln auf die Bearbeitungszone hin ausrichten.

Eine weitere Ausführungsform kann dadurch gekennzeichnet sein, dass mehrere Umlenkanordnungen in unterschiedlichen Azimutwinkeln β um die optische Achse vorzugsweise gleich verteilt angeordnet sind.

Eine erfindungsgemässe Laserschneidvorrichtung kann auch vorteilhafterweise derart gestaltet sein, dass zumindest eine der Detektoranordnungen einen Detektor sowie zumindest ein optisches Zwischenelement umfasst, welches die Gesamtheit der unter einem bestimmten Polarwinkel von der Bearbeitungszone ausgehenden Strahlung auf den Detektor lenkt. Dazu wird das Zwischenelemente vorzugsweise als Reflektoranordnung ausgelegt sein.

Eine weitere alternative Ausführungsform der Laserschneidvorrichtung ist dadurch gekennzeichnet, dass die Detektoranordnungen ringförmig um die optische Achse herum angeordnete Einkoppelstellen für die Strahlung in Strahlungsleitanordnungen oder weitere Umlenkanordnungen sowie entfernt von den Einkoppelstellen bzw. den weiteren Umlenkanordnungen positionierte Detektoren umfassen. Auch hier ist wieder vorteilhafterweise eine geometrische Anordnung gewählt, bei welcher die Einkoppelstellen für die Strahlung aus der Bearbeitungszone entlang zumindest eines zur optischen Achse koaxialen und im Wesentlichen senkrechten Kreises angeordnet sind. Möglich sind auch hier mehrere übereinanderliegende Kreise für diese Einkoppelstellen, wie sie auch für die Detektoranordnungen an sich möglich sind.

Als Strahlungsdetektoren kommen vorteilhafterweise Fotodetektoren für die Detektoranordnungen zum Einsatz, die insbesondere als Fotodioden, Thermosäulen oder Zeilensensoren ausgeführt sind.

Bevorzugt sind die Detektoranordnungen für zumindest zwei unterschiedliche Wellenlängenbereiche und/oder Strahlungsarten empfindlich, vorzugsweise für Wellenlängenbereiche zwischen 0.7 und 1 µm und/oder zwischen 1.45 und 1.8 µm. Dies kann durch die Bauart der Detektoren selbst erreicht werden, als auch beispielsweise durch Spektralfilter vor den Detektoranordnungen bzw. zumindest vor dem eigentlichen Detektor selbst. Damit sind auch besonders schmalbandige und damit besonders aussagekräftige Messungen möglich.

Um die Abbildungsqualität der Detektoranordnungen zu optimieren, können vor den Detektoren oder vor den Zwischenelementen Blendenanordnungen, insbesondere Schlitzblenden, angeordnet sein.

Vorteilhafterweise können bei einer alternativen erfindungsgemässen Ausführungsform der Laserschneidvorrichtung zumindest einige Detektoren und/oder zumindest einige Zwischenelemente in der Düse eingesetzt oder darin ausgebildet sein. Besonders vorteilhaft ist dies für Zwischenelemente in Form von Reflektoranordnungen, insbesondere von Spiegeln oder spiegelnd ausgeführten Bereichen der Düseninnenwandung. Dabei sind die Anordnung zur Erzeugung und Führung eines Arbeitslaserstrahls und die Düse vorzugsweise lösbar miteinander verbunden.

Alle oben erläuterten Merkmale tragen dazu bei, dass zur verbesserten Erfassung relevanter Qualitätsparameter des Schneidprozesses Strahlung aus einem erweiterten Bereich des Schnittspaltes, d.h. mit grossen Polarwinkeln zur optischen Achse, erfasst werden kann.

Als Ergänzung zur bislang erläuterten erfindungsgemässen Laserschneidvorrichtung zur bevorzugt Online-Prozesskontrolle von Laserbrennschneidprozessen, können vorteilhafterweise zusätzlich ein Detektor mit einer Beobachtungsrichtung parallel zur optischen Achse und ein optisches Zwischenelement vorgesehen sein. Bevorzugt ist dabei der Detektor auf der der Bearbeitungszone abgewandten Seite des fokussierenden Elementes positioniert. Ebenfalls bevorzugt ist dabei die Positionierung des optischen Zwischenelementes zwischen dem fokussierenden Element und der Bearbeitungszone, möglichst innerhalb der Düse. Wieder ist es aber von erfindungswesentlicher Bedeutung, dass auch hier das Zwischenelement die Beobachtungsrichtung des Detektors für zumindest einen Azimutwinkel β auf einen Polarwinkel grösser 5° in Bezug auf die optische Achse des Arbeitslaserstrahls in Richtung auf die Bearbeitungszone hin umlenkt. Bevorzugt wird mit Polarwinkeln grösser oder gleich 7°, insbesondere Polarwinkeln von ca. 10° oder mehr, gearbeitet.

Für diese ergänzte Laserschneidvorrichtung sieht eine bevorzugte Ausführungsform vor, dass das Zwischenelement die Beobachtungsrichtung des Detektors in einem Bereich des Azimutwinkels β von maximal 45° zur Bewegungsrichtung der Düse und entgegen deren Bewegungsrichtung auf die Bearbeitungszone hin umlenkt. Dabei ist vorgesehen, dass das Zwischenelement die Strahlung aus der Bearbeitungszone zumindest aus unterschiedlichen Polarwinkeln, vorzugsweise auch aus unterschiedlichen Azimutwinkeln β, auf den parallel zur optischen Achse ausgerichteten Detektor umlenkt.

Bevorzugt ist auch eine Laserschneidvorrichtung vorgesehen, bei welcher die Detektoranordnung einen neben dem Arbeitslaserstrahl und in dessen Ausbreitungsrichtung vor dem fokussierenden Element angeordneten zusätzlichen Detektor umfasst, dessen Beobachtungsrichtung zumindest nach dem fokussierenden Element schräg zur optischen Achse des Arbeitslaserstrahls auf die Bearbeitungszone hin verläuft. Besonders vorteilhaft für eine derartige Vorrichtung ist ein Verlauf der optischen Achse des Detektors schräg zur optischen Achse des Arbeitslaserstrahls. Damit lassen sich Abbildungsfehler der Detektoren, insbesondere von Kameras, relativ einfach beseitigen.

Eine weitere Alternative ist dadurch gekennzeichnet, dass die optische Achse des Detektors in Ausbreitungsrichtung des Arbeitslaserstrahls vor dem fokussierenden Element im Wesentlichen parallel zur optischen Achse des Arbeitslaserstrahls verläuft und nach dem fokussierenden Element, nach Ablenkung durch dieses Element, schräg auf die Bearbeitungszone hin verläuft.

Auch kann im Rahmen der Erfindung dafür vorgesehen sein, dass die Beobachtungsrichtung der Detektoranordnung entgegengesetzt zur Bewegungsrichtung der Düse ausgerichtet ist. Vorzugsweise ist dabei die Detektoranordnung in Umfangsrichtung um den Arbeitslaserstrahl herum bewegbar und/oder kann die Beobachtungsrichtung unterschiedliche Polarwinkel annehmen.

Schliesslich ist eine weitere Ausführungsform der ergänzten Laserschneidvorrichtung dadurch gekennzeichnet, dass die Beobachtungsrichtung des zusätzlichen Detektors zumindest nach dem fokussierenden Element unter einem Polarwinkel grösser gleich 2° zur optischen Achse des Arbeitslaserstrahls verläuft, vorzugsweise unter einem Polarwinkel zwischen 2° und 4°.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung beschrieben sind. Dabei können die in den Ansprüchen und in der Beschreibung erwähnten Merkmale jeweils einzeln für sich oder in beliebiger Kombination erfindungswesentlich sein.

Die Bezugszeichenliste ist Bestandteil der Offenbarung. Die Figuren werden zusammenhängend und übergreifend beschrieben. Gleiche Bezugszeichen bedeuten gleiche Bauteile, Bezugszeichen mit unterschiedlichen Indices geben funktionsgleiche oder ähnliche Bauteile an.

Es zeigen dabei:
- Fig. 1: die Einflussfaktoren und Qualitätsmerkmale beim Laserschneiden,
- Fig. 2: schematisch einen Brennschneidprozess in verschiedenen Qualitäten,
- Fig. 3: ein Diagramm zum Zusammenhang zwischen Schneidprozesszustand, Schneidqualität und Prozessstrahlung,
- Fig. 4: koaxiale Kameraaufnahmen von Laserschneidprozessen,
- Fig. 5: Abbildungen von Schnittflächen und Schneidfronten von Proben unterschiedlicher Schneidqualität,
- Fig. 6: den Zusammenhang Mittelwert Schneidfrontnachlauf und Qualitätsklasse,
- Fig. 7: einen Schnitt durch eine Schneidfront mit angedeutetem Schmelzfilm sowie den Strahlengang eines Detektors mit erfindungsgemässem grossem Polarwinkel sowie kleinem, herkömmlichem Polarwinkel,
- Fig. 8: links die Sichtbereiche von vier Fotodioden unterhalb der Schneiddüse, in der Mitte die Sichtbereiche für eine Fotodiode bei unterschiedlichen Schneiddüsen, und rechts eine Simulation mit Streulicht,
- Fig. 9: eine schematische Darstellung der geometrischen Verhältnisse für den Grenzfall der direkten Sicht nach unten in den Schnittspalt, inkl. Berechnung des Grenzwinkels β zwischen Schneidrichtung und Diodenachse,
- Fig. 10: ein Diagramm mit den Signalen von acht Fotodioden beim Schneiden eines Vollkreises,
- Fig. 11: eine Grafik zur Korrelation der Detektorsignale eines 10°-Detektors mit Schlackenrückstand im Schnittspalt,
- Fig. 12: eine Gegenüberstellung der Signale des 10° und 5°-Detektors bei Schlackenrückstand im Schnittspalt,
- Fig. 13: die Verhältnisse bei einem kurzzeitigen Schnittabriss mit Gegenüberstellung der Signale des 10° und 5°-Detektors.
- Fig. 14: eine schematische Schnittansicht durch den Austrittsbereich des Laserstrahls eines Laserschneidkopfes und Eintrittsbereich von Prozessstrahlung,
- Fig. 15: eine Übersichtsdarstellung der Sichtfelder verschiedener Detektoren auf die Schneidfront und - im rechten Teil der Abbildung - deren Projektion auf die Oberfläche des Werkstücks,
- Fig. 16: einen beispielhaften Detektoraufbau mit Konusspiegel und acht am Umfang verteilten Fotodetektoren,
- Fig. 17: eine weitere Ausführungsform einer erfindungsgemässen Detektoranordnung mit mehreren Spiegelflächen und einem zylindrisch angeordneten Detektor-Array,
- Fig. 18: einen erfindungsgemässen Detektoraufbau mit Konusspiegel und Schlitzblenden,
- Fig. 19: eine schematische Darstellung einer Anordnung zur Abbildung des unteren und oberen Bereiches der Prozesszone auf eine Kamera via Freiform-Spiegelflächen, und
- Fig. 20: eine schematische Darstellung einer Anordnung zur exzentrischen Abbildung des unteren Bereiches der Prozesszone auf eine Kamera.

Zur Beobachtung und Kontrolle von Laserbearbeitungsprozessen kommen sehr spezialisierte Vorrichtungen und Verfahren zum Einsatz, welche sich eng an den Eigenschaften des jeweiligen Prozesses (Schweissen, Schneiden, Bohren, usw.) orientieren müssen. Dies ist insbesondere beim Laserbrennschneiden der Fall. Dem Fachmann ist bekannt, dass der Stand der Technik bisher grösstenteils Lösungen für Laserschweissen umfasst, nicht aber funktionierende und spezialisierte Lösungen für Laserschneiden, insbesondere nicht für Laserbrennschneiden. Im Folgenden werden deshalb die wichtigen physikalischen Aspekte im Hinblick auf ein Prozessmonitoring von Laserbrennschneiden gemäß der Erfindung ausgeführt. Dabei wird sich zeigen, dass eine für Laserbrennschneiden ausgelegte Detektoranordnung auch für Laserschmelzschneiden entscheidende Vorteile bringt.

Über den Laserbrennschneidprozess und dessen Theorie existiert eine Vielzahl an Publikationen. An dieser Stelle sei nur die schon alte, aber sehr gute Publikation Arata, Y., et.al.: Dynamic Behaviour in Laser Gas Cutting of Mild Steel, Transactions of JWRI, Vol.8 (1979) No.2, S.175-186 erwähnt, welche einige Eigenheiten und Zusammenhänge sehr anschaulich aufzeigt.

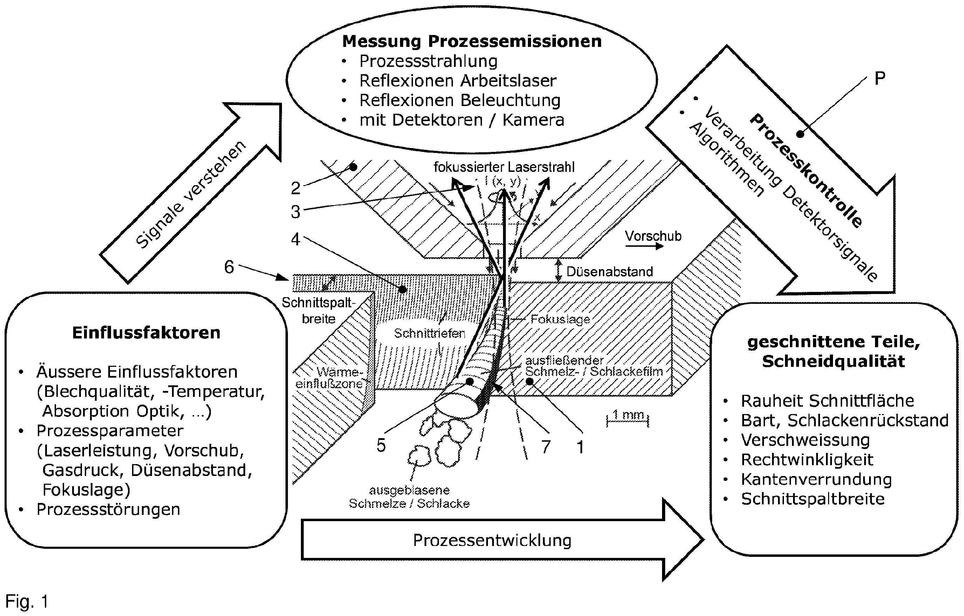

Der Laserschneidprozess ist, wie in Fig. 1 dargestellt ist, von einer Vielzahl von Einflussfaktoren abhängig. Einige Einflussfaktoren sind von aussen vorgegeben, z.B. die Materialqualität des Werkstücks 1 oder die Strahlqualität des durch vorzugsweise die Öffnung einer Düse 2 austretenden Laserstrahls 3. Andere Einflussfaktoren, wie z.B. die Laserleistung, können von der CNC-Steuerung so angepasst werden, dass der Schneidprozess möglichst unter optimalen Bedingungen abläuft. Sie werden Prozessparameter genannt. Mithilfe einer Online-Messung von Prozessstrahlung werden mittels Algorithmen Signal-Charakteristiken berechnet (Pfeil P), welche mit der Schneidqualität korrelieren.

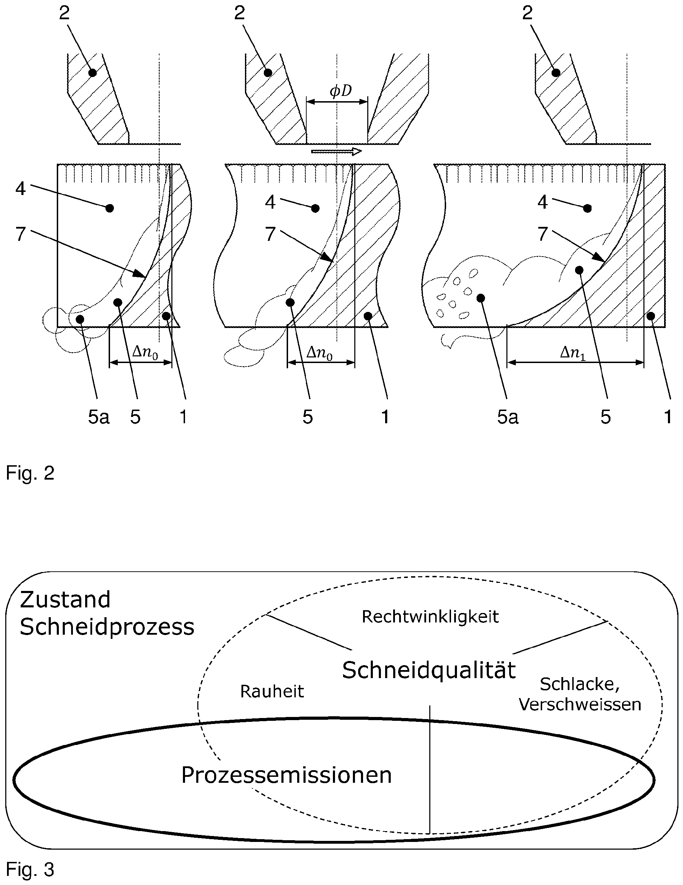

Das interessierende Ergebnis des Laserschneidprozesses sind zwei Schnittflächen 4, welche eine bestimmte Schneidqualität aufweisen. Die Schneidqualität kann in verschiedene Merkmale unterteilt werden. Neben den Merkmalen Rechtwinkligkeit und Rauheit, kann beim Laserbrennschneiden mit Schneidgas Sauerstoff auch Schlackenrückstand 5a (Fig. 2) als Qualitätsdefekt auftreten. Dieser soll möglichst verhindert werden, da sonst Teileausschuss entstehen kann.

Die Emissionen von der Prozesszone, wie Strahlung oder Schall, enthalten Informationen zum Zustand des Schneidprozesses. Die Prozessstrahlung wird bevorzugt im Schneidkopf an geeigneten Positionen mittels Detektoren erfasst. Aus den Detektorsignalen werden gemäß der Erfindung mithilfe von geeigneten Algorithmen Charakteristiken berechnet, welche mit den verschiedenen Merkmalen der Schneidqualität korrelieren.

Bei guter Schneidqualität wird die Schmelze 5 resp. Schlacke vollständig aus dem Schnittspalt 6, resp. von der Bearbeitungszone oder Schneidfront 7 ausgetrieben. Ist der Austrieb gestört, kann je nach Schweregrad Schlacke 5 an den unteren Schnittkanten ankleben oder im Schnittspalt 6 zurückbleiben. Eine starke Ausprägung von Schlackenrückstand 5a ist, wenn das Blech 1 im unteren Schnittfugenbereich wieder verschweisst. Die stärkste Erscheinungsform ist ein Prozessabriss, wenn der Laserstrahl 3 das Blech 1 nicht mehr vollständig durchtrennt.

Fig. 2 zeigt im mittleren Bereich einen Brennschneidprozess in guter Qualität, mit dem auf der Schneidfront 7 (Grenzfläche fest/flüssig) abfliessenden Schlackefilm. Fast alle Einflussfaktoren können bei schlechter Einstellung die Schneidqualität beeinträchtigen, also entweder zu rauem Schnitt führen oder den Schmelzeaustrieb stören. Entsprechend vielfältig sind die Fehlerbilder von Schlackenrückstand 5a. Das Verhältnis von Düsendurchmesser (ØD) und Schneidfrontnachlauf (Δn₀) ist wirklichkeitsgetreu dargestellt. Der in Fig. 2 links dargestellte Prozesszustand zeigt einen gestörten Schlackeaustrieb, infolge z.B. falscher Einstellung der Fokuslage. Der Schneidfrontnachlauf kann aber erfahrungsgemäss noch gleich gross sein, wie beim einwandfreien Prozess. Im Unterschied dazu zeigt der in Fig. 2 rechts dargestellte Prozesszustand einen sehr grossen Schneidfrontnachlauf (Δn₁), welcher z.B. infolge zu hohem Vorschub zustande kommen kann. Entsprechend gross ist der Schlackenrückstand 5a, resp. das Wieder-Verschweissen der beiden Schnittflächen. Im Extremfall erfolgt ein Schnittabriss.

Der physikalische Schneidprozesszustand braucht zu seiner Beschreibung als Funktion der Zeit eine Vielzahl an Zustandsgrössen. Wie in Fig. 3 zu erkennen ist, bildet sich eine Teilmenge davon auf die Schneidqualität ab, eine andere Teilmenge ist in der Prozessstrahlung im Schneidkopf sichtbar. Diese beiden Teilmengen überschneiden sich, aber sie sind nie deckungsgleich. Je nach Art der erfassten Prozessstrahlung und dem Ort der Detektoren sind unterschiedliche Qualitätsmerkmale mehr oder weniger sichtbar. Diese theoretischen Ausführungen sind sowohl für Fotodetektoren wie auch für Kameras gültig. Zusätzlich sind in der erfassten Prozessstrahlung immer auch Informationen enthalten, welche sich nicht in der Schneidqualität wiederspiegeln.

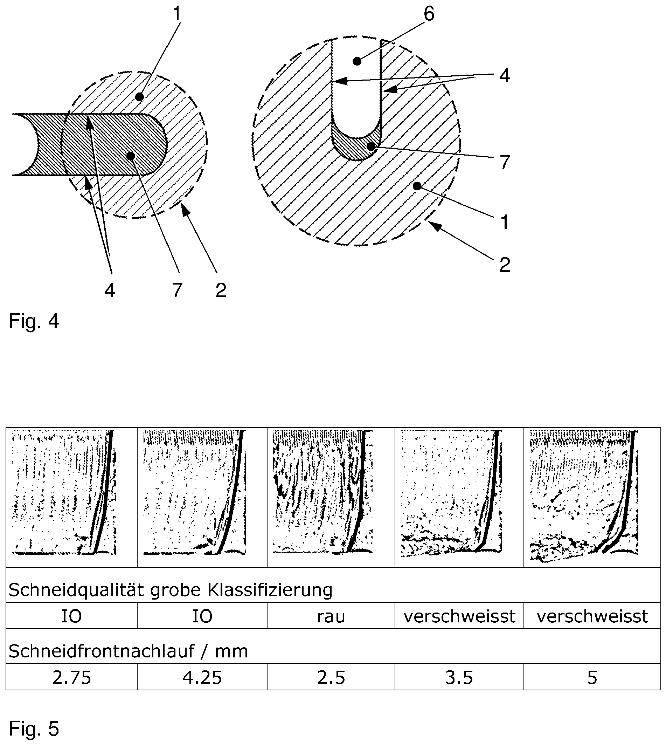

Meist werden bislang Detektoren verwendet, welche die Strahlung aus der Prozesszone koaxial oder konzentrisch (und parallel) zum Bearbeitungslaserstrahl 3 erfassen, entweder mit Fotodetektoren oder Kameras. Dabei wird die Prozessstrahlung nach der Fokussieroptik über dichroitische Spiegel oder Umlenk-Lochspiegel resp. Scraperspiegel aus dem Strahlengang des Arbeitslaserstrahls 3 ausgekoppelt. Aufgrund des grossen Abstandes der Fokussieroptik zur Prozesszone und Schneiddüse 2 schränkt deren kleine Öffnung den Sichtbereich quasi auf den Düsendurchmesser ein, und das Winkelspektrum der erfassten Strahlung liegt aufgrund der Apertur der Fokussieroptik bei <5°. Dies bringt Einschränkungen für die Beobachtung des Laserschneidprozesses mit sich, welche anhand der in Fig. 4 abgebildeten zwei Aufnahmen von Schneidfronten aufgezeigt werden. Die Bilder wurden mit koaxial angeordneter Kamera während dem Schneiden erfasst. Die rechte Schneidfront 7 (durchgehend umrandet) stammt von einem Laserschmelzschneidprozess. Sie ist sehr steil und wird somit stark verkürzt abgebildet. D.h. es geht sehr viel Information vom oberen Bereich der Schneidfront 7 verloren. Auch die Beobachtbarkeit von Riefenbildung, welche an den Seitenwänden 4 unmittelbar nach der Schneidfront 7 entsteht, ist durch die verkürzte koaxiale Abbildung deutlich eingeschränkt. Nur gerade die Riefenstruktur, welche an der Oberkante des Schnitts 6 sichtbar ist, kann analysiert werden. Demgegenüber entsteht beim Laserbrennschneiden eine flache Schneidfront 7, wie dies in Fig. 4 links dargestellt ist. Diese ist koaxial nie vollständig durch die Düse 2 sichtbar, ausser mit einer für eine adäquate Prozessführung viel zu grossen Düse 2 (die Öffnung der Düse 2 ist gestrichelt dargestellt). Der unterste Teil der Schneidfront 7 bleibt unsichtbar, obwohl gerade dort bei schlechtem Prozesszustand Schlackenrückstand entsteht, welcher die Ursache für Teileausschuss ist.

Die Abstimmung des Detektors auf den beim Brennschneiden typisch grossen Schneidfrontnachlauf Δn hat sich als vorteilhaft erwiesen, um insbesondere Schlackenrückstand detektieren zu können. D.h. der Detektor kann durch die erfindungsgemässe Gestaltung Strahlung vom unteren Bereich der Schneidfront erfassen, dort wo Schlackenrückstand auftreten kann. Die Vorteile eines solchen Detektors liegen aber auch für den Schmelzschneidprozess auf der Hand: Vom koaxial nur sehr stark verkürzt sichtbaren oberen Bereich der Schneidfront und der entstehenden Schnittflächen lässt sich mit der erfindungsgemässen Detektoranordnung viel mehr Strahlung erfassen, wodurch insbesondere die Riefenentstehung und somit die Rauheit der Schnittfläche detektiert werden können. Im Folgenden wird zuerst der Zusammenhang zwischen Schneidfrontnachlauf und Schneidqualität aufgezeigt. Anschliessend werden die wesentlichen Eigenschaften eines geeigneten nichtkoaxialen Detektors erläutert und abschliessend wird anhand von zwei Beispielen aufgezeigt, wie die Signale des erfindungsgemässen Detektors mit Schlackenrückstand korrelieren.

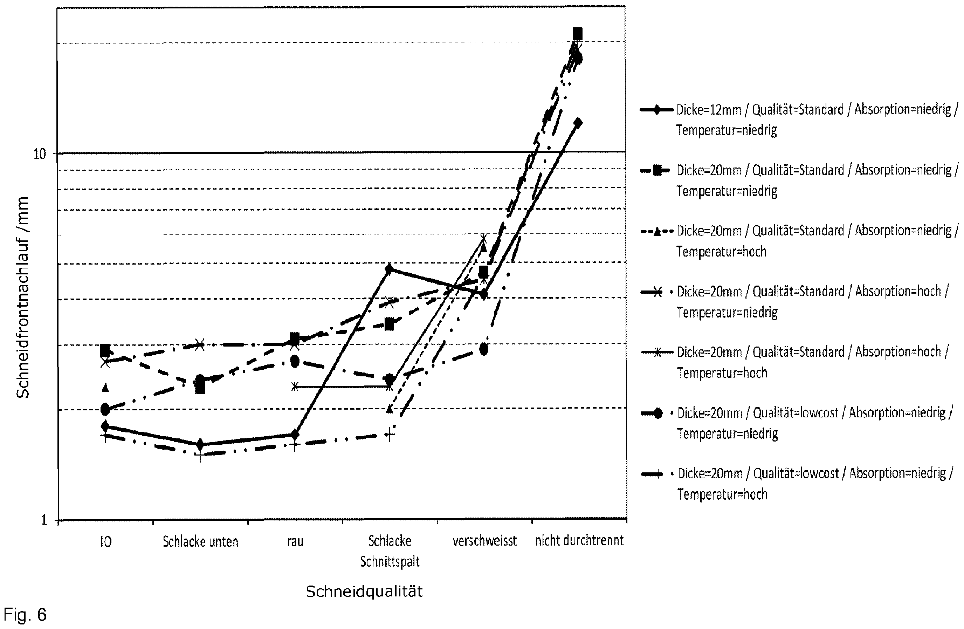

In Versuchen wurden durch Variation von Einflussfaktoren und Prozessparametern Schneidproben mit unterschiedlicher Schneidqualität erzeugt. Einige Proben von Stahl 20 mm sind in Fig. 5 beispielhaft abgebildet, wobei deren Schnittfläche und Schneidfront ersichtlich sind. Der Schneidfrontnachlauf für gute Schneidqualität beträgt dabei 2.75 mm oder auch (grosse) 4.25 mm. Der letztere kam bei einem Schnitt mit erhöhter Schneidlinsenabsorption zustande. Die zwei rechten Schneidproben zeigen Schlackenrückstand und Verschweissung sowohl bei einem moderaten Schneidfrontnachlauf von 3.5 mm wie auch bei einem grösseren von 5 mm. Fig. 6 zeigt für mehrere Versuchsserien den Verlauf des Schneidfrontnachlaufs in Abhängigkeit der Schneidqualitätsklasse, wobei die Blechdicke und - qualität, die Probentemperatur und die Absorption der Schneidlinse variiert wurden. Die Schneidqualitätsklassen sind links beginnend mit guter Qualität "IO" nach sinkender Qualität geordnet. Auf eine Eigenheit der Klassen mit Schlackenrückstand muss hingewiesen werden: Ein zur Klasse "Verschweisst" gehörender Schnitt weist auch Schlackenrückstand im Schnittspalt auf. Tritt dagegen nur Schlackenrückstand im Schnittspalt ohne Verschweissen auf, werden die Proben in der Klasse "Schlacke Schnittspalt" aufgeführt. Der leichteste Qualitätsdefekt betreffend Schlacke ist, wenn nur Schlacke an der Unterseite des Bleches haften bleibt. Dieser Fall führt in den wenigsten Fällen zu Teileausschuss. Für den Fall eines Prozessabrisses (Klasse "nicht durchtrennt") wurde der Schneidfrontnachlauf per Definition auf Blechdicke festgelegt, obwohl er hier eigentlich gegen unendlich anwächst. Es zeigte sich, dass der Zusammenhang Schneidfrontnachlauf und Schneidqualität im Allgemeinen nur schwach korreliert ist. Allerdings hängt der Schneidfrontnachlauf durchaus mit Schlackenrückstand zusammen, insbesondere bei gleichen Umgebungsbedingungen, wie z.B. gleichem Material. Weiter führt ein sehr grosser Schneidfrontnachlauf immer zu Schlackenrückstand 5a im Schnittspalt 6 und Verschweissen. Allerdings kann bereits bei kleinem Schneidfrontnachlauf u.U. starker Schlackenrückstand 5a auftreten, und umgekehrt kann bei ziemlich hohem Nachlauf immer noch ein schlackefreier Schnitt erreicht werden, weshalb eine Online-Messung nur des Schneidfrontnachlaufs nicht zielführend wäre.

Im Folgenden werden die optischen Eigenschaften des erfindungsgemässen Detektors erläutert, welcher insbesondere Schlackenrückstand detektieren soll und auf die oben erläuterten Eigenschaften der Schneidfront resp. auf den Schneidfrontnachlauf abgestimmt ist.

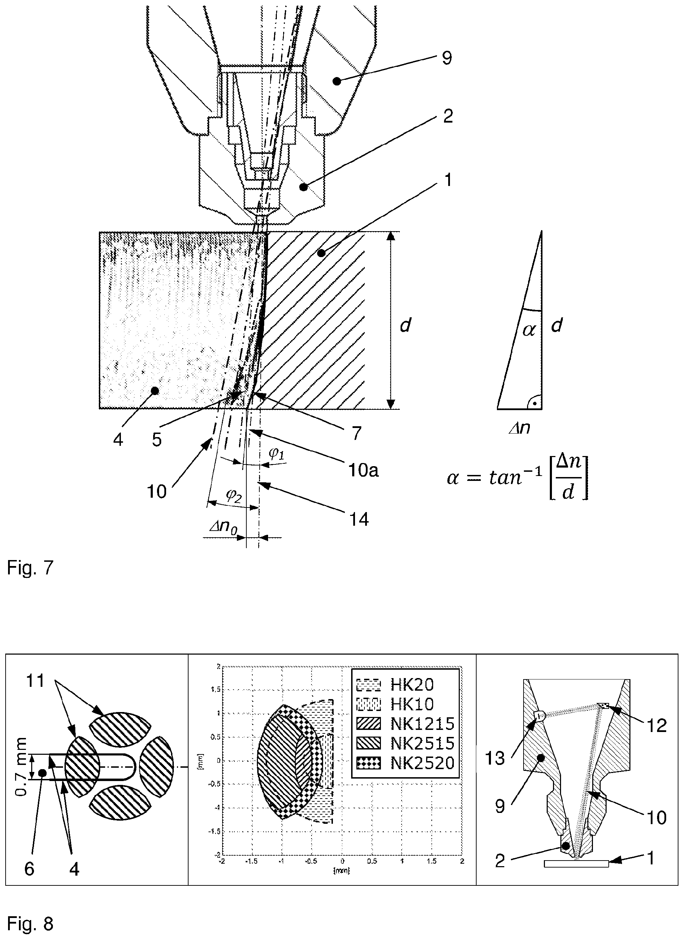

Die in Fig. 7 gezeigte Schneidfront 7 eines Schnittes in Stahl 20 mm mit guter Schneidqualität weist einen geringen Schneidfrontnachlauf Δn₀ auf, beispielsweise ca. 2 mm. Dies entspricht gemäss der in Fig. 7 gezeigten einfachen trigonometrischen Beziehung einer mittleren Schneidfrontneigung α von 5.7°. Die Schneidfront 7 ist ähnlich einer Rutschbahn halbkreisförmig geformt und verläuft oben steil und gegen unten zunehmend flacher. Auf dieser in Schneidrichtung mitwandernden Schneidfront 7 fliesst die Schmelze resp. Schlacke 5 gegen unten ab. Im unteren Bereich des Blechs 1 ist der Schlackefluss deutlich dicker als im oberen Bereich. Je nach Prozesszustand verändert sich die Dicke und Austrittsgeschwindigkeit des Schlackeflusses 5. Will man nun den Schlackefluss beobachten und allfällige abnorme Zustände, wie Schlackenrückstand 5a detektieren, ist der Beobachtungswinkel entscheidend. Es ist hierfür nicht zielführend, nur den oberen und mittleren Bereich der Prozesszone 7 zu beobachten, worauf ein koaxiales System eingeschränkt ist, vielmehr muss der unterste Bereich der Schneidfront und des Schlackeflusses beobachtet werden. Betrachtet man alle möglichen vorkommenden Schneidfrontnachläufe wie aus Fig. 6 ersichtlich, bewegen sich diese in einem Bereich von ca. 2 bis 6 mm (Prozessabriss ausgenommen). Für einen Schneidfrontnachlauf von 4 mm, welcher fast immer zu Verschweissung führt, beträgt die mittlere Schneidfrontneigung α ca. 11°. Dies entspricht erfahrungsgemäss einer guten Beobachtungsrichtung. Es versteht sich, dass für dünnere Bleche leicht kleinere Schneidfrontnachläufe resultieren, weshalb die mittlere Schneidfrontneigung für gute Schneidqualität in etwa konstant bleibt.

Im Folgenden werden die Konsequenzen diskutiert, welche für eine Beobachtungsrichtung von 10° resultieren, in Fig. 7 dargestellt durch die begrenzenden Linien des Strahlenbündels 10, welches von einem Detektor mit 10° Polarwinkel durch die Schneiddüse 2 eines Laserschneidkopfes 9 hindurch erfasst werden kann, im Vergleich zu einer Beobachtungsrichtung von 5°, dargestellt mit einem Strahlenbündel 10a, welches von einem Detektor mit 5° Polarwinkel erfasst werden kann. Es ist ersichtlich, dass der 10°-Detektor im Fall eines normalen Schneidfrontnachlaufs Δn₀ im untersten Bereich auf den Schlackefluss 5 sieht. Mittels des 10°-Detektors kann gezielt die Veränderung der Schneidfront 7 im unteren Bereich, resp. der Schneidfrontnachlauf oder allfälliger Schlackenrückstand beobachtet werden. Demgegenüber sieht der 5°-Detektor auch bei minimalem Schneidfrontnachlauf immer auf den Schmelz- resp. auf den Schlackefluss 5 im oberen und mittleren Bereich des Blechs 1, was die direkte Beobachtbarkeit von Schlackenrücktand, wie im koaxialen Fall, verunmöglicht.

Eine weitere wichtige Eigenschaft eines Detektors ist die Unabhängigkeit des Signals von der Schneidrichtung, oder im Fall von mehreren Einzeldetektoren oder von einer ortsaufgelösten Abbildung, die Invarianz aller Einzelsignale gegenüber einer Drehung um die optische Achse, was gleichbedeutend mit einer Veränderung der Schneidrichtung ist. Wenn beispielsweise ein Vollkreis geschnitten wird, und der Schneidprozesszustand und somit die Qualität am Umfang des geschnittenen Werkstücks überall gleich sind, dann müssen immer gleiche (transformierte resp. gedrehte) Signale gemessen werden. Die Notwendigkeit dieser Eigenschaft liegt auf der Hand und wird im Stand der Technik seit langem gefordert. Entsprechend sind auch technische Lösungen hierfür seit langem bekannt. Beispielsweise im Falle einer Detektoranordnung mit einem einzelnen Fotodetektor kann mithilfe eines Scraperspiegels oder eines dichroitischen Spiegels sämtliche in einem definierten Polarwinkelbereich auf dem Spiegel eintreffende Strahlung auf eine Fotodiode umgelenkt werden, was eine Voraussetzung für die Unabhängigkeit des Signals von der Schneidrichtung ist. Erfahrungsgemäss reicht aber der Informationsgehalt eines solchen einzigen Signals nicht aus, die wesentlichen Qualitätsmerkmale eines mit Laserbrennschneiden produzierten Werkstücks detektieren zu können, auch wenn zwei unterschiedliche Wellenlängenbereiche, beispielsweise des sichtbaren Lichts und des nahen Infrarots gemessen werden oder sogar eine zeitlich hoch aufgelöste Spektralmessung vorgenommen wird.

Um den obigen gravierenden Nachteil eines Einzeldetektors zu eliminieren, ist es naheliegend und gehört zum Stand der Technik, mit einer Kamera in koaxialer Anordnung den Bearbeitungsprozess zu beobachten, wie in Fig. 4 gezeigt. Durch die ortsaufgelöste Information kann eine Vielzahl von geometrischen Merkmalen der Schneidfront und der sich ausbildenden Schnittfuge mittels Bildverarbeitung berechnet werden. Dadurch können einige Qualitätsdefekte wie rauher Schnitt, breiter Schnittspalt resp. unkontrolliertes Abbrennen, erkannt und eindeutig unterschieden werden. Dennoch lassen sich keine direkten Informationen über Schlackenrückstand aus einem koaxialen Kamerabild gewinnen, weil, wie oben ausgeführt, der untere Bereich der Schneidfront nicht im Bild ersichtlich ist.

Demgegenüber kann mit der erfindungsgemässen Detektoranordnung direkt der hintere resp. untere Bereich der Schneidfront und des Schlackeflusses beobachtet werden (Fig. 7), um direkt auf Schlackenrückstand schliessen zu können. Damit dies in jede Schneidrichtung funktioniert, muss die Strahlung aus dem erfindungstypischen Polarwinkelbereich azimutal, d.h. am Umfang ortsaufgelöst erfasst werden, wodurch eine azimutal aufgelöste Abbildung der Bearbeitungszone ermöglicht wird (Fig. 8 links). Dies kann durch koaxiale Beobachtung nicht erreicht werden, wohl aber durch eine erfindungsgemässe Ausführungsform mit einem Spiegel, der das Licht auf mehrere gleichmässig am Detektorumfang verteilte Fotodioden umlenkt. Dabei beschränkt sich die Ortsauflösung auf die diskret vorhandenen Detektoren. Bevorzugt wird ein Konusspiegel verwendet, der trotz schlechter Fokussierung zufriedenstellende Resultate liefert. Insbesondere in Verbindung mit einer Anordnung von mindestens fünf, vorzugsweise acht um die optische Achse des Arbeitslaserstrahls vorzugsweise gleich verteilt positionierten Fotodioden kann die Bedingung integraler Auskopplung, d.h. Erfassung aller am Detektorspiegel eintreffenden Strahlung zufriedenstellend erreicht werden. Auch andere Spiegelarten und Spiegelformen sind möglich, beispielsweise Spiegel mit fokussierenden Segmenten.

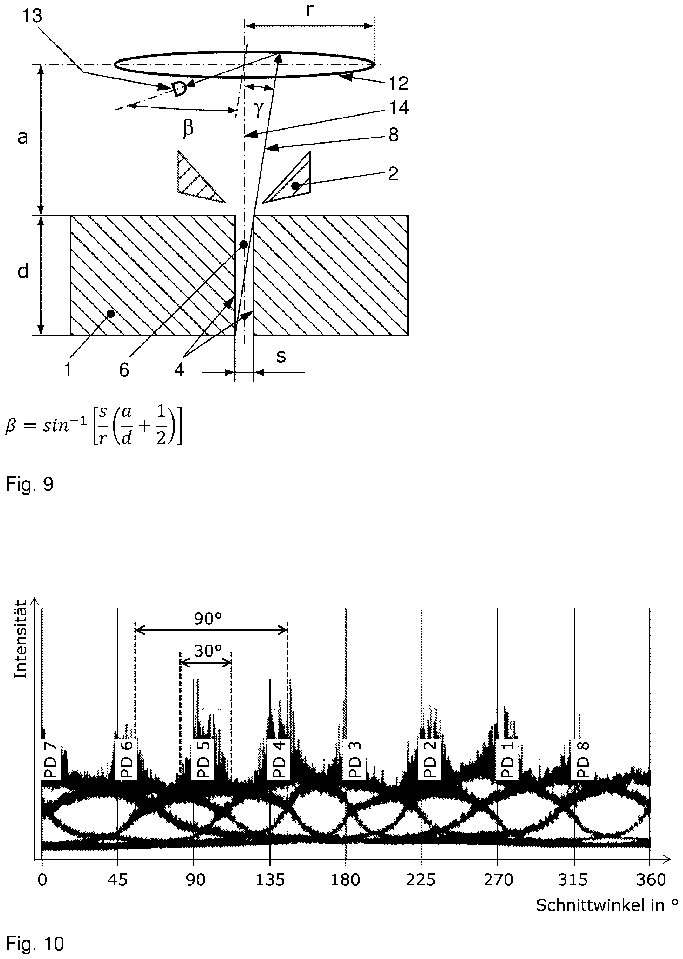

Die Fig. 8 zeigt links eine Grafik mit den Sichtbereichen 11 von vier Fotodioden auf der Blechoberfläche für eine typische Schneiddüse. Dabei wurde nur direktes Licht berücksichtigt. Es ist ersichtlich, dass ein einzelner Detektor auf der Blechoberfläche ein ellipsenähnliches (geometrische Figur, begrenzt durch Ellipsensegmente mit unterschiedlicher kleiner Achse) Sichtfeld aufweist, welches beinahe einen Quadranten abdeckt. Umso mehr ist mit fünf oder noch besser acht Fotodioden der gesamte Umfangsbereich lückenlos abzudecken. D.h. die azimutale Auflösung der erfassten Strahlung nimmt zu. Bemerkenswert ist aber, dass nur ein Sichtfeld den massstäblich eingezeichneten Schnittspalt trifft, nämlich dasjenige des nach hinten in den Schnittspalt blickenden Detektors. Die anderen Sichtfelder befinden sich neben dem Schnittspalt auf der Blechoberfläche. Dieser Umstand wird weiter unten zu Fig. 10 diskutiert. Weiter sind in der Mitte der Fig. 8 die Sichtbereiche bei Verwendung unterschiedlicher Schneiddüsen abgebildet. Bemerkenswert ist, dass für Doppelkonusdüsen (beispielhaft in Fig. 7 ersichtlich), welche beim Brennschneiden eingesetzt werden, der Innenkonus den Zentrumsbereich der Strahlung bogenförmig ausblendet, während einfache Konusdüsen auf der Blechoberfläche fast bis ins Zentrum des Schnittspalts sehen. Wie die Streulichtgrafik ganz rechts in Fig. 8 andeutet, wird ein beträchtlicher Anteil der Strahlung an Düseninnenflächen reflektiert. Abhängig vom Düsentyp beträgt der Anteil von reflektiertem Licht zu direktem Licht ca. 30%, wenn der Bereich unterhalb der Düse 2 gleichmässig ausgeleuchtet ist.

Aus Fig. 10 ist zu erkennen, dass selbst die seitlich und nach vorne zum Schnittspalt blickenden Fotodioden Licht aus der Schnittfuge detektieren können, auch bei den für Brennschneiden verwendeten Doppelkonusdüsen. Die Sichtbereiche dieser Fotodioden, die nirgends den Schnittspalt treffen, erfassen - wie durch die Streulichtsimulation nahegelegt - Strahlung, welche an Innenflächen im untersten Bereich der Schneiddüse reflektiert wird. Die so reflektierte Strahlung, wie auch die direkte Strahlung aus dem unteren Bereich der Schneidfront, welche hauptsächlich durch den nach hinten blickenden Fotodetektor erfasst wird, sind für die Informationsgewinnung hinsichtlich der Schneidqualitätsmerkmale von entscheidender Bedeutung. Es versteht sich, dass die erfasste Strahlung und die Art der Abbildung vielen Einflussfaktoren unterliegen (Düsengrösse, Reflektivität der Düsenoberfläche usw.), welche hier nicht näher ausgeführt werden, und welche namentlich bei einer einfachen koaxialen Abbildung mit Kamera nicht auftreten. Diese scheinbaren Nachteile der erfindungsgemässen Detektoranordnung werden aber durch geeignete Auswertealgorithmen eliminiert, und die Information betreffend Schlackenrückstand 5a kann damit aus den Signalen herausgefiltert werden.

Für die nach hinten in den Schnittspalt d.h. schleppend blickenden Fotodetektoren schattet, je nach Schneidrichtung, die Schnittoberkante wegen des tiefen und schmalen Schnittspalts den Blick nach hinten mehr oder weniger ab. Aus den in Fig. 9 dargestellten geometrischen Verhältnissen, und der ebenfalls in Fig. 9 aufgeführten Formel, ist der theoretische Grenzwinkel β der Schneidrichtung zur Diodenachse herleitbar. Die optische Achse der optischen Elemente zur Führung des Arbeitslaserstrahls, insbesondere der dem Werkstück 1 nächstliegenden Fokussieroptik, ist mit 14 bezeichnet. Für ein Werkstück 1 mit einer Dicke von 20 mm und einer Breite des Schnittspalts 6 von 0.7 mm ergibt sich zusammen mit den Abmessungen einer beispielhaften erfindungsgemässen Detektoranordnung mit einem ringförmigen Konusspiegel 12 (a = 140 mm, r = 12 mm) und zumindest einer Fotodiode 13 als eigentlicher Detektor ein theoretischer Grenzwinkel β von 26°. Weicht die Schneidrichtung mehr als 26° von der Beobachtungsrichtung der Fotodiode ab, ist das untere Ende der Schnittfuge vollständig abgeschattet. Daraus folgt, dass mit einer Anordnung mit acht Fotodioden 13 bei den beispielhaft angegebenen Abmessungen in jeder Schneidrichtung Strahlung vom unteren Ende des Schnittspalts 6 erfasst werden kann. Eine Detektoranordnung die erfindungsgemäss wie oben erläutert mit acht Fotodioden ausgestattet ist, gewährleistet die azimutal aufgelöste schleppende Sicht nach hinten in den Schnittspalt und die schneidrichtungsunabhängige Detektion von Schlackenrückstand. Es versteht sich, dass eine Detektoranordnung auch mit mehr als acht Fotodioden bestückt werden kann, wodurch dann gleichzeitig mehr als eine Fotodiode direkte Sicht nach hinten in den Schnittspalt erhält. Dies kann für die algorithmische Auswertung der Signale vorteilhaft sein. Es versteht sich aber auch, dass eine Detektion von Schlackenrückstand auch mit weniger als acht Fotodioden funktioniert, insbesondere bei kleineren Detektorabmessungen a und r, oder wenn die Detektion nur in eine oder wenige Schneidrichtungen funktionieren muss.

Fig. 10 zeigt die für einen Vollkreis resultierenden Signale des erfindungsgemässen 10°-Detektors. Demnach sieht die schleppend, d.h. nach hinten ausgerichtete Fotodiode 13 in einem Bereich von ca. 30° resp. +/- 15° zur Schneidrichtung direktes Licht von der Schneidfront 7 und des Schlackeflusses 5 im untersten Bereich der Schnittfuge. In diesem Bereich zeigt das Signal einen deutlich erhöhten Pegel, welcher allerdings von der Schneidgeschwindigkeit und anderen Einflussfaktoren abhängt. Weiter ist auch die Signaldynamik in diesem Bereich sehr gross, was durch die hohe Schmelzflussdynamik verursacht wird. Dieser Bereich verbreitert sich, wenn der Schnittspalt 6 breiter wird. Im erweiterten Bereich von 90° sieht die Fotodiode zwar noch direkt in die Schnittfuge, allerdings nur noch an die Seitenwände. In diesem Bereich (± 45°) überschneidet sich der in Fig. 8 gezeigte ungefähr ellipsenförmige Sichtbereich 11 der Fotodioden 13 noch mit dem Schnittspalt. Ausserhalb dieses Bereichs sieht die Fotodiode nur noch reflektiertes Licht, und der Signalpegel fällt deutlich ab. Das reflektierte Licht ist dann eine Mischung aus diversen Anteilen.

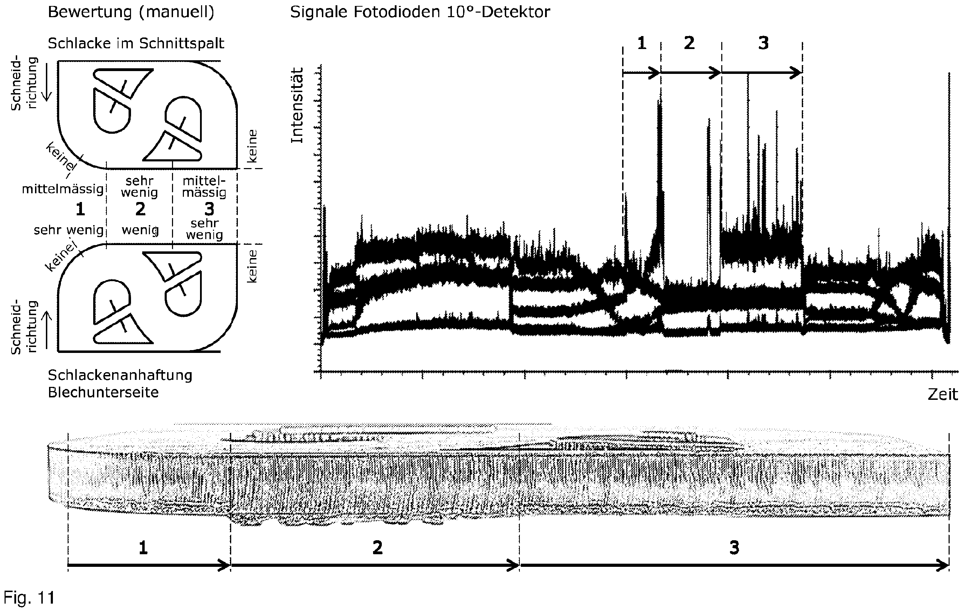

Nachfolgend soll in Zusammenhang mit Fig. 11 die Detektion von sporadisch auftretendem Schlackenrückstand 5a im Schnittspalt 6 mittels der Fotodioden 13 des 10°-Detektors erläutert werden. Lagert sich die Schlacke 5 im Schnittspalt 6 an, ist ein deutlicher Sprung des schleppenden Signals ersichtlich, im Gegensatz zu einem Schnittspalt ohne Schlacke, oder zu Schlackenanhaftung an der Blechunterseite. Schlackenrückstand 5a führt je nach Konsistenz und Rückstandshöhe definitiv zu Teileausschuss, selbst wenn der schlimmste Qualitätsdefekt vollständiger Verschweissung resp. der Schnittabriss noch lange nicht eingetreten ist.

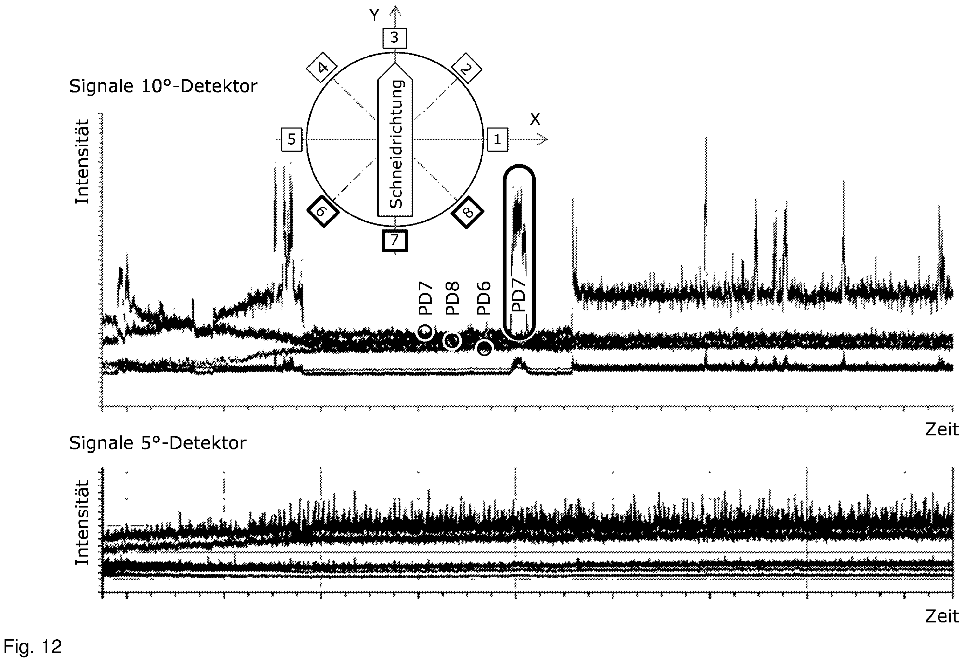

Wie die Fig. 12 nachweist, ist die oben beschriebene Ausprägung von Schlackenrückstand 5a für einen 5°-Detektor unsichtbar. Aus allen bisherigen Ausführungen folgt auch, dass diese Ausprägung von Schlackenrückstand durch koaxiale Beobachtung nicht erkannt werden kann, weder mit Fotodetektor noch mittels Kamera. Bemerkenswert ist, dass beim 10°-Detektor genau die schleppend, nach hinten blickende Fotodiode einen deutlichen Signalsprung aufweist, während die direkt benachbarten Fotodioden keinerlei Intensitätsanstieg registrieren. Dies lässt sich aufgrund der oben bereits erwähnten Eigenschaft erklären, wonach diese Fotodioden nur noch direktes Licht von den Seitenwänden 4 des Schnittspalts 6 direkt hinter der Schneidfront 7 erfassen, welche hier nicht durch den noch moderaten Schlackenrückstand beeinträchtigt werden. Dieser Umstand kann mithilfe geeigneter Algorithmen zur Detektion von Schlacke gut ausgenützt werden.

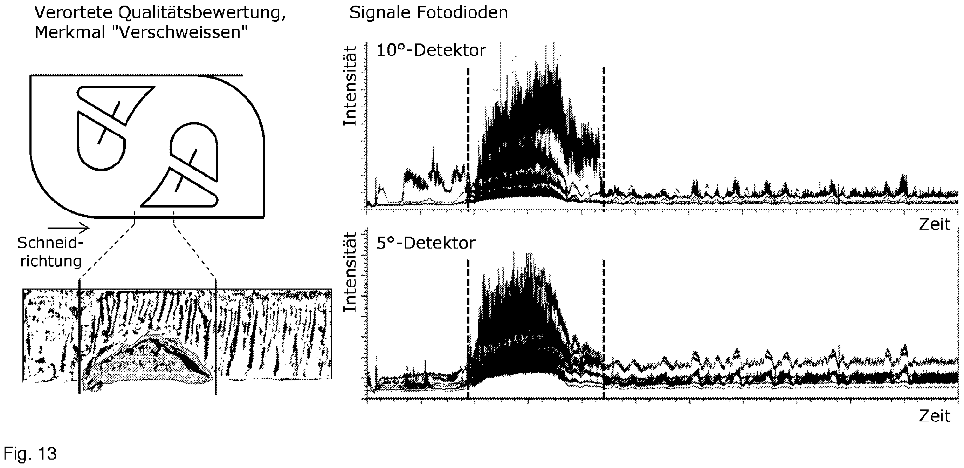

Wenn ein Schnittabriss auftritt, dann zeigt sich dies auch in den Signalen herkömmlicher, fast koaxialer 5°-Detektoren und bei wirklich koaxialen Systemen, wie in Fig. 13 erkennbar ist. Ist allerdings nur ein einzelner Fotodetektor eingebaut, und wird kein Referenzschnitt zugrunde gelegt, können selbst bei diesem allerschlimmsten Defekt Pseudofehler auftreten, weil sich andere Effekte, wie z.B. erhöhte Schneidgeschwindigkeit oder breiter Schnittspalt in ähnlicher Grössenordnung überlagern können.

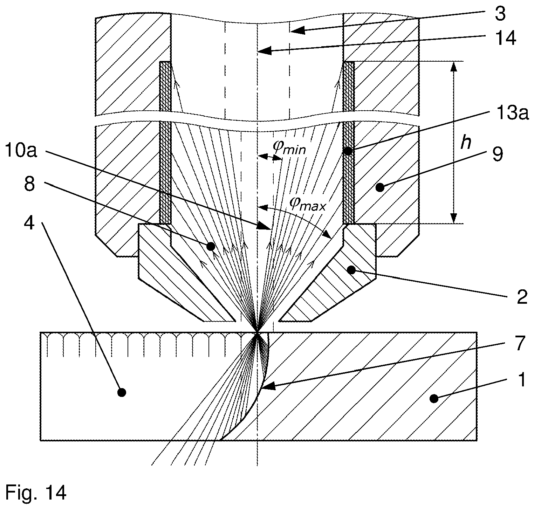

Die Merkmale der erfindungsgemässen Detektoranordnung mit 10°-Polarwinkel lassen sich verallgemeinern. Wie in Fig. 14 sehr vereinfacht gezeigt, kann sämtliche Strahlung 8 erfasst werden, welche durch die Düse unter einem grossen Polarwinkel ≥ 5° zur optischen Achse 14 eintritt. Gegebenenfalls kann der Polarwinkelbereich auch eingeschränkt sein, beispielhaft auf ≥ 7° oder wie in der oben detailliert beschriebenen Anordnung auf ca. 10°. Für bestimmte Anwendungen mit sehr langgestreckter, flacher Schneidfront können auch Polarwinkel > 10° vorteilhaft sein.

Diese Detektormerkmale ermöglichen, durch die Öffnung der Schneiddüse 2 Bereiche der Schneidfront 7 und des Schlackeflusses 5 zu beobachten, die weit ausserhalb der optischen Achse 14, ausserhalb des Blickfeldes eines herkömmlichen koaxialen Systems liegen. Auf diese Weise können, wie oben beschrieben, zusätzliche Informationen über den Prozesszustand gewonnen werden, welche für ein koaxiales System unsichtbar sind, welche aber für die Verhinderung von Teileausschuss relevant sind. Die strahlungsempfindliche Detektorfläche 13a ist in Fig. 14 zylindrisch dargestellt. Sie befindet sich bevorzugt im Laserschneidkopf 9, zwischen der Fokussieroptik (nicht dargestellt) und der Schneiddüse 2. Ganz allgemein ist diese Fläche aber als räumliche Eintrittsfläche der Strahlung 8 zu verstehen, hinter welcher beliebige optische, mechanische und elektronische Komponenten enthalten sind, um die Strahlung umzulenken, abzubilden und zu erfassen.

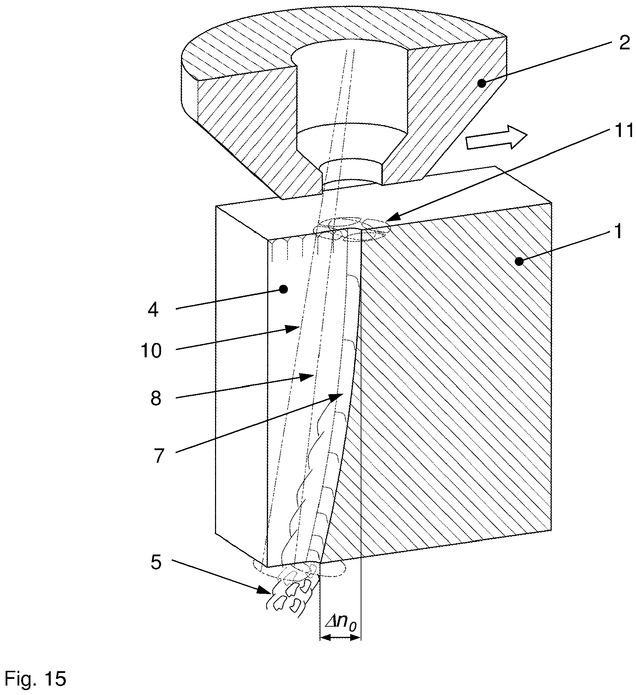

Auf Basis dieses Grundprinzips können für die konkrete Ausgestaltung der Detektoranordnung viele Varianten vorgesehen sein, beispielsweise mit direkter Bestrahlung der eigentlichen Sensoren 13. Die durch die Düsenöffnung eintretende Strahlung 8 kann direkt mittels einem oder mehrerer Detektoren 13, welche auf der bestrahlten Fläche angebracht sind, erfasst werden. Je nach Ausrichtung und Akzeptanzwinkel der Detektoren 13 kann gezielt nur das Licht aus der Öffnung der Düse 2 erfasst und unerwünschte diffuse oder direkte Reflektionen an Innenwänden des Bearbeitungskopfs 9 ausgeblendet werden. Mehrere Detektoren 13 können am Umfang angeordnet werden. Aufgrund der Blendenwirkung der Düsenöffnung hat jeder Detektor 13 sein eigenes Sichtfeld 11 auf die Prozesszone, wie in Fig. 15 dargestellt ist. Insbesondere erhält derjenige Detektor 13, welcher in Schneidrichtung nach hinten sieht, Strahlung vom unteren Teil der Schneidfront 7 und insbesondere auch von glühendem Schlackenrückstand 5a, welcher bei schlechtem Prozesszustand in diesem unteren Bereich des Schnittspalts zurückbleibt.

Andererseits ist auch eine Umlenkung der Strahlung über ein oder mehrere optische Zwischenelemente 12 auf die Sensoren 13 möglich. Vorteilhafterweise können ein oder mehrere Spiegel zur Umlenkung verwendet werden, beispielsweise der oben schon erwähnte Konusspiegel, oder es können auch Linsen oder Prismen oder Gradientenindexlinsen zur Umlenkung, Ablenkung oder Fokussierung der Strahlung 8 verwendet werden. Bei Verwendung optischer Zwischenelemente können die Sensoren an beliebiger Stelle im Bearbeitungskopf 9 untergebracht sein, insbesondere in Ausbreitungsrichtung des Arbeitslaserstrahls 3 entweder vor oder nach dessen Fokussieroptik, insbesondere dem letzten Element der fokussierenden Anordnung, welches der Bearbeitungszone am nächsten liegt. Eine vorteilhafte Ausgestaltung der Erfindung verwendet einen ringförmig angeordneten Umlenkspiegel. Dadurch kann gezielt die Strahlung aus der Düsenöffnung in einem definierten Polarwinkelbereich auf die Detektoren 13 gelenkt werden. Grundsätzlich sind verschiedene Spiegelformen möglich, wobei die einfachste Form ein Konusspiegel 12 ist. Andere Spiegelformen erlauben eine Fokussierung des Lichts auf einzelne Detektoren 13 entweder in der Ebene konstanten Azimutwinkels mittels eines in dieser Ebene konkaven Spiegelprofils und oder in der zur optischen Achse senkrechten Ebene mittels einzelner, auf jeweils einen Detektor fokussierenden Spiegelsegmente.

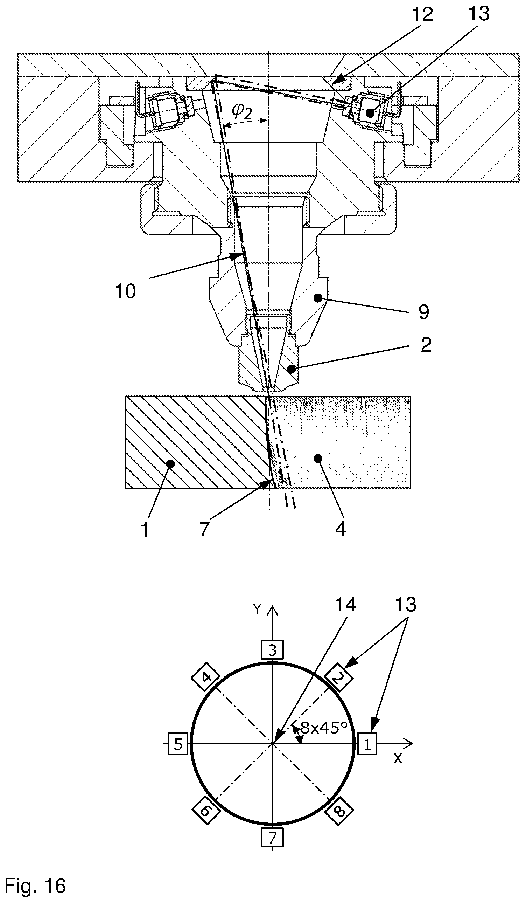

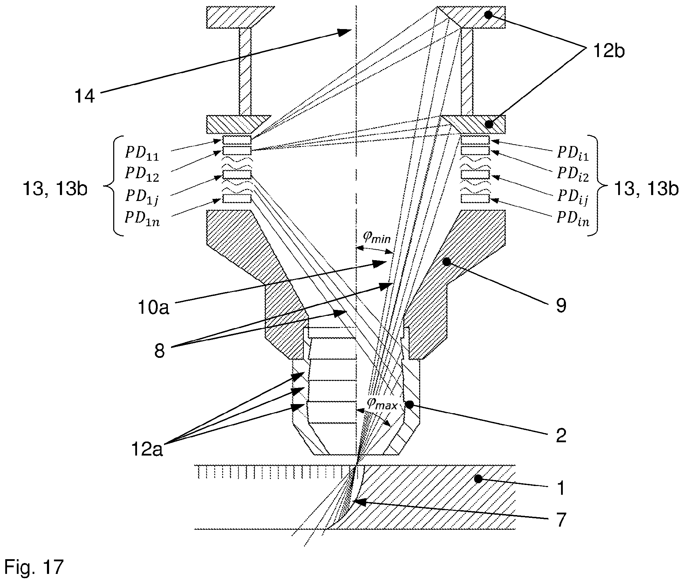

Wie in Fig. 16 gezeigt ist, kann Strahlung 10 aus einem typischen Polarwinkelbereich von 10° +/- ca. 1° mit einem einfachen konischen Spiegel 12 auf einem oder vorzugsweise auf mehrere Detektoren 13 abgebildet werden. Die einzelnen Fotodetektoren 13 sind vorzugsweise gleichmässig am Umfang verteilt, wie im rechten Teil der Fig. 16 dargestellt ist. Eine vernünftige Umfangs- resp. Azimutalauflösung ist, wie weiter oben hergeleitet, z.B. mit acht Sensoren 13 möglich. Um einen grösseren Polar-Winkelbereich auf die Detektoren 13 abzubilden, können, wie in Fig. 17 beispielhaft gezeigt, weitere Spiegelflächen 12a im Bereich der Düse 2 und/oder oberhalb der Sensoren, aber noch unterhalb der Fokussieroptik angebracht werden, welche die Strahlung entweder auf denselben Detektor 13 oder auf mehrere in der Höhe resp. in Strahlachsrichtung 14 angeordnete Detektoren 13 oder Zeilen von Sensoren 13b reflektieren. Hier sind mehrere, vorzugsweise acht, oder auch mehr Zeilensensoren 13b, oder senkrechte Anordnungen von Einzelsensoren 13, in gleicher Entfernung von der Düsenöffnung über den Umfang verteilt angeordnet. Neben mehreren Spiegelelementen 12b oberhalb der Bearbeitungsdüse können auch kleine Spiegelflächen 12a in der Bearbeitungsdüse 2 untergebracht werden. Mit der Anordnung mehrerer Detektoren 13 am Umfang und in Strahlachsrichtung, oder mehrerer Zeilensensoren 13b am Umfang entsteht ein Detektor-Array. Mit diesem kann ein azimutal und radial ortsaufgelöstes Abbild der Prozesszone erfasst werden. Weiter ist denkbar, dass die Strahlung über zwei oder mehr Spiegel 12a, 12b hintereinander umgelenkt wird, bevor sie auf einen Sensor 13, 13b trifft.

Die Detektoranordnung kann verschiedene optische Zwischenelemente im Beobachtungsstrahlengang aufweisen, wie etwa Konusspiegel, Segmentspiegel oder Blenden. Anstelle herkömmlicher Sensoren kann die Strahlung auch in Lichtwellenleiter eingekoppelt und an anderer Stelle auf Fotodetektoren geleitet werden. Eine bevorzugte Ausführung führt die Faserenden in einer Linie angeordnet auf einen Zeilensensor, oder als Rechteckblock auf einen Flächensensor, wodurch eine hohe Auflösung erzielbar ist.

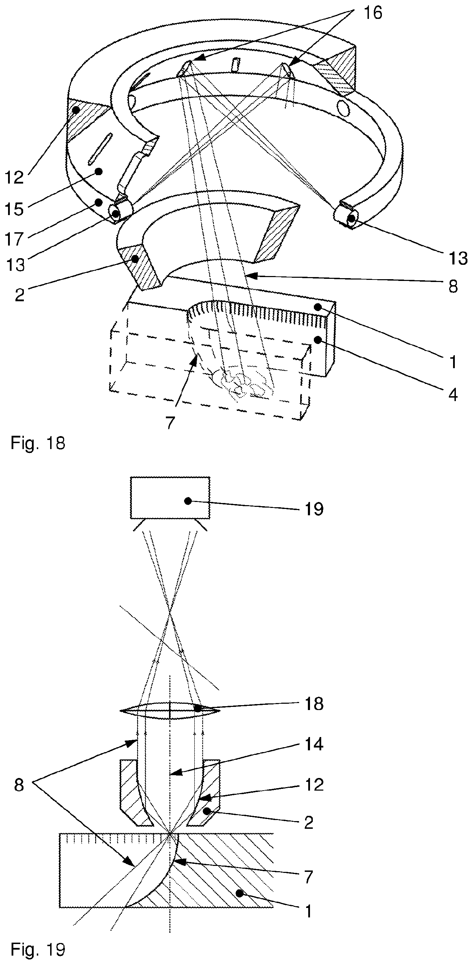

Bisher ist die Öffnung der Düse 2 die einzige Blende, welche als Eintrittspupille wirkt. Die damit erzielbare Auflösung ist insbesondere senkrecht zur Strahlachse resp. in Azimutalrichtung beschränkt. Um eine höhere Azimutal- resp. Umfangsauflösung zu erzielen, müssen vor den Umlenkspiegeln Blenden angebracht werden. Bevorzugt wird dies mit Schlitzblenden gemäss Fig. 18 erreicht. Hier ist ein Detektoraufbau mit einem ringförmigen Konusspiegel 12 und einem davor eingesetzten Ring 15 mit entlang des Umfangs des Ringes 15 verteilten Schlitzblenden 16 dargestellt. Durch die Bearbeitungsdüse 2 eintretende Strahlung 8 gelangt durch die Schlitzblenden 16 auf den Konusspiegel 12 und wird von diesem auf einen der Sensoren 13 auf beispielsweise einem Sensorenring 17 reflektiert.

Es versteht sich, dass Detektoren 13 mit unterschiedlichen Sensitivitätsbereichen betr. Strahlungswellenlänge eingesetzt werden können. Z.B. Silizumdetektoren für den sichtbaren Wellenlängenbereich, Indium-Gallium-Arsenid-Detektoren (InGaAs) für den nahen Infrarotbereich. Daneben können auch Sensoren für Ultraviolett- und Pyrodetektoren für ferne Infrarotstrahlung sowie Vorfilter für schmalere Wellenlängenbereiche eingesetzt werden. Bevorzugt sind die Wellenlängenbereiche zwischen 0.7 und 1 µm und/oder zwischen 1.45 und 1.8 µm vorgesehen. In ersterem Fall liegt gegenüber der ungefilterten Variante keine Tageslichtempfindlichkeit vor, die entsprechende Wellenlängenbereich ist aus pyrometrischer Sicht sehr gut, zudem kann hier mit Silizium-Detektoren gearbeitet werden. Der zweite Bereich etwas grösserer Wellenlänge, mit InGaAs-Fotodetektoren messbar, erlaubt aufgrund des unterschiedlichen Emissionsgrads in diesem Wellenlängenbereich die bessere Unterscheidbarkeit von Schlacke gegenüber flüssigem Metall.

Eine weitere von obigen diskreten Detektorvorrichtungen grundsätzlich verschiedene Ausgestaltung der Erfindung zeigt Fig. 19. Es wird eine herkömmliche Detektoranordnung mit einer Kamera 19 in koaxialer Anordnung und hinter der Fokussieroptik 18 benutzt, um wie üblich die Prozesszone bis zum Düsenrand abzubilden. Der koaxial unsichtbare Teil der Bearbeitungszone wird nun über eine geeignet gekrümmte spiegelnde Freiformfläche 12a auf die freie Kameradetektorfläche, neben dem koaxialen Bild der Prozesszone abgebildet. Aufgrund der Abbildungseigenschaften ist es notwendig die Spiegelfläche 12a nahe beim Prozess zu positionieren. Dadurch steigt das Verschmutzungsrisiko. Deshalb ist eine besonders vorteilhafte Ausgestaltung der Erfindung, die Spiegelfläche 12a in der Bearbeitungsdüse 2 zu integrieren, welche regelmässig ausgetauscht wird.

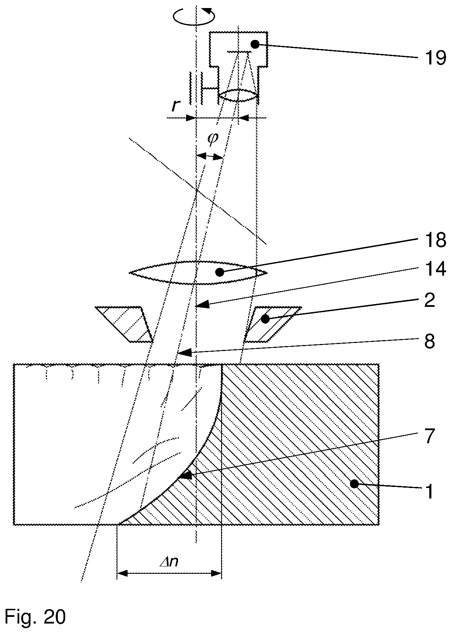

Eine weitere ähnliche Ausführungsform zeigt Fig. 20. Es wird als zusätzliche Detektoranordnung zu den oben erläuterten Ausführungsformen mit Beobachtungsrichtungen unter einem Polarwinkel gleich bzw. grösser als 5°zur optischen Achse 14 des Arbeitslaserstrahls 3 beispielsweise eine Kamera 19 mit direkter Sicht auf die Prozesszone 7 verwendet. Diese ist aber nicht in herkömmlicher Weise koaxial zur optischen Achse 14 des Arbeitslaserstrahls angeordnet, sondern weist, wie in Fig. 20 bezeichnet, einen Offset r auf, zwischen der optischen Achse 14 des Arbeitslaserstrahls 3 und der optischen Achse der Kamera bzw. deren Beobachtungsrichtung. Die Kamera 19 befindet sich dabei in Ausbreitungsrichtung des Arbeitslaserstrahls 3 vor dem fokussierenden Element wie etwa einer Linse 18. Dadurch kann, unter Verwendung geeigneter optischer Filter, das untere Ende der Schneidfront direkt aus den Kamerabildern, in Echtzeit mittels digitaler Bildverarbeitung, als Übergang zwischen der hellen Schneidfront 7 und dem beispielsweise dunklen Schnittspalt 6, detektiert werden. Dabei verläuft die Beobachtungsrichtung der Kamera 19 zumindest nach dem fokussierenden Element 18 schräg zur optischen Achse des Arbeitslaserstrahls 3 auf die Bearbeitungszone hin. Dazu kann die optische Achse des Detektors, wie etwa der Kamera 19 selbst, schräg zur optischen Achse 14 des Arbeitslaserstrahls 3 verlaufen.

Eine weitere Ausführungsform, die eine sehr schmale bauliche Ausführung des Laserbearbeitungskopfes erlaubt, weist eine Kamera 19 auf, deren optische Achse in Ausbreitungsrichtung des Arbeitslaserstrahls 3 vor dem fokussierenden Element 18 im Wesentlichen parallel zur optischen Achse 14 des Arbeitslaserstrahls verläuft. Nach dem fokussierenden Element 18 hingegen verläuft die Beobachtungsrichtung schräg auf die Bearbeitungszone hin. Dabei wird durch das fokussierende Element 18 auch die Ablenkung der schräg eintretenden detektierten Strahlung auf die Kamera 19 hin bewerkstelligt.

Wie zu den physikalischen Aspekten des Laserbrennschneidens oben ausgeführt, korreliert der Schneidfrontnachlauf Δn mit dem Schlackenrückstand 5a. D.h. übersteigt der Schneidfrontnachlauf einen bestimmten Schwellwert, ist das Risiko für Schlackenrückstand erhöht. Besonders vorteilhaft ist, den Schneidfrontnachlauf, welcher in Echtzeit aus den Kamerabildern detektiert wird, auf einen bestimmten Sollwert zu regeln.

Die Kameraanordnung 19 ist vorzugsweise derart angeordnet, dass deren Beobachtungsrichtung entgegengesetzt zur Bewegungsrichtung der Düse 2 ausgerichtet ist. Besonders bevorzugt ist zur Berücksichtigung beliebiger, auch wechselnder Bewegungs- bzw. Vorschubrichtungen der Düse 2 möglich, dass die Kameraanordnung 19 entsprechend der Schneidrichtung mitgedreht wird, z.B. mit einem Schrittmotor, sodass die Beobachtungsrichtung 8 immer entgegen der Schneidrichtung nach hinten in den Schnittspalt gerichtet ist. Je nach Grösse des für den zu bearbeitenden Werkstoff typischen Schneidfrontnachlaufs kann der Offset r unterschiedlich eingestellt werden, sodass auch der Polarwinkel ϕ zwischen der optischen Achse des Arbeitslaserstrahls 14 und der optischen Achse der Kamera 19 unterschiedliche Werte annehmen kann. Der maximale Polarwinkel ϕ wird durch die Aperturen der dazwischenliegenden Optiken des Arbeitslaserstrahlengangs beschränkt. Weiter kann zwecks Korrektur von Abbildungsfehlern die Kameraachse leicht geneigt werden.

Eine besonders vorteilhafte Ausgestaltung der Erfindung ist, den Offset r mittels einer Verstelleinheit, z.B. eines Schrittmotors, in Echtzeit dem detektierten Schneidfrontnachlauf bis zu einer definierten Obergrenze anzupassen. Dadurch wird sichergestellt, dass das zu detektierende Ende der Schneidfront nicht aus dem Bildbereich der Kamera wandert. Wandert das Schneidfrontende trotzdem aus dem Bildbereich, entweder im Fall ungeregelter Beobachtung des Schneidfrontnachlaufs, oder bei aktiver Regelung durch eine plötzlich eintretende Schneidprozessstörung, kann die erfindungsgemässe Detektorvorrichtung mit dem Polarwinkelbereich von 5° oder mehr den eintretenden Qualitätsdefekt detektieren.

### Bezugszeichenliste

- 1: Werkstück, Blech
- 2: Schneiddüse
- 3: Arbeitslaserstrahl
- 4: Schnittfläche
- 5: Schmelze, Schlacke (5a Schlackenrückstand)
- 6: Schnittfuge
- 7: Schneidfront, Bearbeitungszone oder Prozesszone
- 8: Allgemeine Beobachtungsrichtung oder Strahlenbündel eines Detektors
- 9: Laserschneidkopf
- 10: Strahlenbündel eines 10°-Detektors (10a Strahlenbündel 5°-Detektor)
- 11: Sichtbereiche der Detektoren
- 12: Optisches Zwischenelement, speziell Konusspiegel (12a, 12b Spiegelelemente)
- 13: Fotodiode (13a Zylindersensor, 13b Sensorzeile)
- 14: Optische Achse für Arbeitslaserstrahl
- 15: Blendenring
- 16: Schlitzblenden
- 17: Sensorenring
- 18: Linse
- 19: Kamera
- P: Prozesskontrolle
- Δn: Schneidfrontnachlauf oder Schlepp eines Laserschneidprozesses (Δn₀ normale Ausprägung, Δn₁ zu grosse Ausprägung)
- β: Azimutwinkel zwischen Beobachtungsrichtung eines Detektors und Schneidrichtung resp. Bewegungsrichtung der Schneiddüse

## Patentansprüche

1. Laserschneidvorrichtung, mit einer Anordnung zur Erzeugung und Führung eines Arbeitslaserstrahls (3), mit einer Düse (2) mit einer Öffnung zum Austritt des Arbeitslaserstrahls (3) zu einer Bearbeitungszone, wobei in der Anordnung eine optische Achse (14) definiert ist und die Anordnung zumindest eine den Arbeitslaserstrahl (3) fokussierende Schneidlinse (18), nahe der Öffnung der Düse (2) aufweist, sowie mit einer Anordnung zur Überwachung des Bearbeitungsvorganges, umfassend zumindest eine Gruppe von Detektoranordnungen (12, 13), **dadurch gekennzeichnet, dass** die Laserschneidvorrichtung zumindest eine Auswerteeinheit aufweist, und dass die Detektoranordnungen jeder Gruppe (12, 13) ringförmig um die optische Achse (14) herum angeordnet sind, vorzugsweise entlang zumindest eines zur optischen Achse (14) koaxialen und im Wesentlichen senkrechten Kreises, und die Beobachtungsrichtung (8) der Detektoranordnungen (12, 13) zumindest in einem Teilbereich zwischen dem der Bearbeitungszone nächstliegenden fokussierenden Element (18) und der Bearbeitungszone, vorzugsweise einem dem fokussierenden Element (18) entfernteren Teilbereich, unter einem Polarwinkel (ϕ₁) grösser 5° (10a) in Bezug auf die optische Achse (14) des Arbeitslaserstrahls (3) orientiert ist, vorzugsweise unter einem Polarwinkel grösser oder gleich 7°, insbesondere unter einem Polarwinkel (ϕ₂) von ca. 10° (10), und **dass** die Detektoranordnungen für eine für den Bearbeitungsvorgang charakteristische Strahlung von der Bearbeitungszone empfindlich sind, welche Detektoranordnungen (12, 13) mit zumindest der Auswerteeinheit zum Berechnen von Charakteristika, welche mit den verschiedenen Merkmalen der Schneidqualität korrelieren, mithilfe von geeigneten Algorithmen aus den Detektorsignalen, verbunden sind.

2. Laserschneidvorrichtung nach Anspruch 1, **dadurch gekennzeichnet, dass** zumindest ein optisches Zwischenelement (12), vorzugsweise eine Umlenkanordnung, für zumindest eine Detektoranordnung (12, 13), allenfalls die gesamte Detektoranordnung (12, 13), zwischen der der Bearbeitungszone nächstliegenden fokussierenden Schneidlinse (18) und der Bearbeitungszone angeordnet ist und vorzugsweise zumindest einen Reflektorbereich, allenfalls mehrere untereinanderliegende Spiegelsegmente oder eine gekrümmte Freiformfläche, aufweist.

3. Laserschneidvorrichtung nach Anspruch 1 oder 2, **dadurch gekennzeichnet, dass** zumindest eine Detektoranordnung (13) vorgesehen ist, deren Beobachtungsrichtung (8) in einem Bereich des Azimutwinkels (β) von maximal 45° zur Bewegungsrichtung der Düse (2) und entgegen deren Bewegungsrichtung auf die Bearbeitungszone gerichtet ist.

4. Laserschneidvorrichtung nach einem der Ansprüche 1 bis 3, **dadurch gekennzeichnet, dass** jede um die optische Achse (14) herum angeordnete Gruppe von Detektoranordnungen (12, 13) mindestens fünf, insbesondere mindestens acht Detektoranordnungen (12, 13) umfasst.

5. Laserschneidvorrichtung nach einem der Ansprüche 1 bis 4, **dadurch gekennzeichnet, dass** zumindest eine Detektoranordnung (12, 13) einen Detektor (13) sowie zumindest eine Anordnung mit einem optischen Zwischenelement (12) aufweist, vorzugsweise eine Umlenkanordnung, wobei vorzugsweise der Detektor (13) ein fächerförmiges Beobachtungsstrahlenbündel (8) bezüglich des Polarwinkels (ϕ) aufweist und die Anordnung der optischen Zwischenelemente (12) sich betreffend des Polarwinkels (ϕ) unterscheidende Segmente jeweils eines bestimmten fächerförmigen Beobachtungsstrahlenbündel (8) auf denselben Bereich der Bearbeitungszone hin umlenkt.

6. Laserschneidvorrichtung nach einem der Ansprüche 1 bis 5, **dadurch gekennzeichnet, dass** mehrere Detektoren (13) bzw. Zwischenelemente (12) in im Wesentlichen dem gleichen Azimutwinkel β um die optische Ache (14) vorgesehen sind, deren Beobachtungsrichtungen (8) aus unterschiedlichen Polarwinkeln auf die Bearbeitungszone hin gerichtet sind, oder dass ein Detektor (13) bzw. eine Umlenkanordnung (12) in im Wesentlichen dem gleichen Azimutwinkel β um die optische Achse (14) zwischen unterschiedlichen Polarwinkeln oszilliert und die Beobachtungsrichtung (8) jeweils aus unterschiedlichen Polarwinkeln auf die Bearbeitungszone hin gerichtet ist.

7. Laserschneidvorrichtung nach einem der Ansprüche 1 bis 6, **dadurch gekennzeichnet, dass** mehrere Umlenkanordnungen (12) in unterschiedlichen Azimutwinkeln β um die optische Achse (14) vorzugsweise gleich verteilt angeordnet sind.

8. Laserschneidvorrichtung nach Anspruch 1, **dadurch gekennzeichnet, dass** zumindest eine der Detektoranordnungen (12, 13) einen Detektor (13) sowie zumindest ein optisches Zwischenelement (12) umfasst, vorzugsweise eine Reflektoranordnung, welches die Gesamtheit der unter einem bestimmten Polarwinkel von der Bearbeitungszone ausgehenden Strahlung auf den Detektor (13) lenkt.

9. Laserschneidvorrichtung nach einem der Ansprüche 1 bis 8, **dadurch gekennzeichnet, dass** die Detektoranordnungen (12, 13) ringförmig um die optische Achse (14) herum angeordnete und vorzugsweise entlang zumindest eines zur optischen Achse (14) koaxialen und im Wesentlichen senkrechten Kreises angeordnete Einkoppelstellen für die Strahlung (8) in Strahlungsleitanordnungen oder weitere Umlenkanordnungen umfassen, sowie entfernt von den Einkoppelstellen bzw. den weiteren Umlenkanordnungen positionierte Detektoren umfassen.

10. Laserschneidvorrichtung nach einem der Ansprüche 1 bis 9, **dadurch gekennzeichnet, dass** die Fotodetektoren der Detektoranordnungen (13) insbesondere als Fotodioden, Thermosäulen oder Zeilensensoren ausgeführt sind.

11. Laserschneidvorrichtung nach einem der Ansprüche 1 bis 10, **dadurch gekennzeichnet, dass** die Detektoranordnungen (13) für zumindest zwei unterschiedliche Wellenlängenbereiche und/oder Strahlungsarten empfindlich sind, vorzugsweise für Wellenlängenbereiche zwischen 0.7 und 1 µm und/oder zwischen 1.45 und 1.8 µm.

12. Laserschneidvorrichtung nach einem der Ansprüche 1 bis 11, **dadurch gekennzeichnet, dass** vor den Detektoren (13) oder vor den Zwischenelementen (12) Blendenanordnungen, insbesondere Schlitzblenden (16), angeordnet sind.

13. Laserschneidvorrichtung nach einem der Ansprüche 1 bis 12, **dadurch gekennzeichnet, dass** zumindest einige Detektoren (13) und/oder Zwischenelemente (12), insbesondere Reflektoranordnungen, in der Düse (2) eingesetzt oder darin ausgebildet sind, wobei die Anordnung zur Erzeugung und Führung eines Arbeitslaserstrahls und die Düse (2) vorzugsweise lösbar miteinander verbunden sind.

14. Laserschneidvorrichtung nach einem der Ansprüche 1 bis 13, **dadurch gekennzeichnet, dass** zusätzlich ein Detektor (19) mit einer Beobachtungsrichtung parallel zur optischen Achse (14), vorzugsweise auf der der Bearbeitungszone abgewandten Seite des fokussierenden Elementes (18), und ein optisches Zwischenelement (12), vorzugsweise zwischen dem fokussierenden Element (18) und der Bearbeitungszone, positioniert sind, wobei das Zwischenelement (12) die Beobachtungsrichtung (8) des Detektors (19) für zumindest einen Azimutwinkel β auf einen Polarwinkel grösser 5° (10a) in Bezug auf die optische Achse (14) des Arbeitslaserstrahls (3) in Richtung auf die Bearbeitungszone hin umlenkt, vorzugsweise auf einen Polarwinkel grösser oder gleich 7°, insbesondere auf einen Polarwinkel von ca. 10° (10).

15. Laserschneidvorrichtung nach Anspruch 14, **dadurch gekennzeichnet, dass** das Zwischenelement (12) die Beobachtungsrichtung (8) des Detektors (19) in einem Bereich des Azimutwinkels β von maximal 45° zur Bewegungsrichtung der Düse (2) und entgegen deren Bewegungsrichtung auf die Bearbeitungszone hin umlenkt, wobei das Zwischenelement (12) die Strahlung (8) aus der Bearbeitungszone zumindest aus unterschiedlichen Polarwinkeln, vorzugsweise auch aus unterschiedlichen Azimutwinkeln β, auf den parallel zur optischen Achse (14) ausgerichteten Detektor (19) umlenkt.

16. Laserschneidvorrichtung nach einem der Ansprüche 1 bis 15, **dadurch gekennzeichnet, dass** die Detektoranordnung einen neben dem Arbeitslaserstrahl (3) und in dessen Ausbreitungsrichtung vor dem fokussierenden Element (18) angeordneten zusätzlichen Detektor (19) umfasst, dessen Beobachtungsrichtung zumindest nach dem fokussierenden Element schräg zur optischen Achse (14) des Arbeitslaserstrahls (3) auf die Bearbeitungszone hin verläuft, wobei vorzugsweise die optische Achse des Detektors (19) schräg zur optischen Achse (14) des Arbeitslaserstrahls (3) verläuft.

17. Laserschneidvorrichtung nach Anspruch 16, **dadurch gekennzeichnet, dass** die optische Achse des Detektors (19) in Ausbreitungsrichtung des Arbeitslaserstrahls (3) vor dem fokussierenden Element (18) im Wesentlichen parallel zur optischen Achse (14) des Arbeitslaserstrahls (3) verläuft und nach dem fokussierenden Element (18), nach Ablenkung durch dieses Element, schräg auf die Bearbeitungszone hin verläuft.

18. Laserschneidvorrichtung nach einem der Ansprüche 16 oder 17, **dadurch gekennzeichnet, dass** die Beobachtungsrichtung (8) der Detektoranordnung (19) entgegengesetzt zur Bewegungsrichtung der Düse (2) ausgerichtet ist, wobei vorzugsweise die Detektoranordnung (19) in Umfangsrichtung um den Arbeitslaserstrahl (3) herum bewegbar ist und/oder die Beobachtungsrichtung (8) unterschiedliche Polarwinkel (ϕ) annehmen kann.

19. Laserschneidvorrichtung nach einem der Ansprüche 16 bis 18, **dadurch gekennzeichnet, dass** die Beobachtungsrichtung des zusätzlichen Detektors (19) zumindest nach dem fokussierenden Schneidlinse (18) unter einem Polarwinkel (ϕ) grösser gleich 2° zur optischen Achse (14) des Arbeitslaserstrahls (3) verläuft, vorzugsweise unter einem Polarwinkel (ϕ) zwischen 2° und 4°.

## Claims

1. A laser cutting device, having an arrangement for producing and guiding a working laser beam (3), comprising a nozzle (2) which has an opening for emission of the working laser beam (3) to a machining zone, wherein an optical axis (14) is defined in the arrangement, and the arrangement has at least one cutting lens (18) which focuses the working laser beam (3), near the opening of the nozzle (2), and having an arrangement for monitoring the machining process, comprising at least one group of detector arrangements (12, 13), **characterized in that** the laser cutting device has at least one evaluating unit and that the detector arrangements of each group (12, 13) are arranged in an annular manner about the optical axis (14), preferably along at least one circle which is coaxial and substantially orthogonal to the optical axis (14), and the observation direction (8) of the detector arrangements (12, 13) is oriented at least in a sub-region between the focusing element (18) closest to the machining zone and the machining zone, preferably in a sub-region at a greater distance from the focusing element (18), at a polar angle (ϕ1) greater than 5° (10a) in relation to the optical axis (14) of the working laser beam (3), preferably at a polar angle of greater than or equal to 7°, in particular at a polar angle (ϕ2) of approximately 10° (10), and that the detector arrangements are sensitive to a radiation from the machining zone which is characteristic of the machining process, which detector arrangements (12, 13) are associated with at least the evaluating unit for calculating characteristics that correlate with the different features of the cutting quality, using suitable algorithms from the detector signals.

2. The laser cutting device according to claim 1, **characterized in that** at least one intermediate optical element (12), preferably a deflection arrangement, for at least one detector arrangement (12, 13), at best for the entire deflector arrangement (12, 13), is arranged between the focusing cutting lens (18) closest to the machining zone and the machining zone and preferably comprises at least one reflector region, at best a plurality of mirror segments disposed one below the other or a curved, free-form surface.

3. The laser cutting device according to claim 1 or 2, **characterized in that** at least one detector arrangement (13) is provided, the observation direction (8) of which is directed in a range of the azimuth angle (β) of at most 45° in relation to the movement direction of the nozzle (2) and counter to its movement direction toward the machining zone.

4. The laser cutting device according to one of claims 1 to 3, **characterized in that** each group of detector arrangements (12, 13) arranged about the optical axis (14) comprises at least five, in particular at least eight detector arrangements (12, 13).

5. The laser cutting device according to one of claims 1 to 4, **characterized in that** at least one detector arrangement (12, 13) comprises a detector (13) and at least one arrangement having an intermediate optical element (12), preferably a deflection arrangement, wherein the deflector (13) preferably has a fan-like observation radiation beam (8) with respect to the polar angle (ϕ), and the arrangement of the intermediate optical elements (12) deflects segments, which differ with respect to the polar angle (ϕ), of a certain fan-like observation radiation beam (8) in each case toward the same region of the machining zone.

6. The laser cutting device according to one of claims 1 to 5, **characterized in that** a plurality of detectors (13) or intermediate elements (12) is provided at substantially the same azimuth angle β about the optical axis (14), the observation directions (8) of which are directed toward the machining zone from different polar angles, or that one detector (13) or one deflection arrangement (12) oscillates at substantially the same azimuth angle β about the optical axis (14) between different polar angles, and the observation direction (8) is oriented in each case from different polar angles toward the machining zone.

7. The laser cutting device according to one of claims 1 to 6, **characterized in that** a plurality of deflection arrangements (12) is arranged, preferably evenly distributed, about the optical axis (14) at different azimuth angles β.

8. The laser cutting device according to claim 1, **characterized in that** at least one of the detector arrangements (12, 13) comprises a detector (13) and at least one intermediate optical element (12), preferably a reflector arrangement, which deflects towards the detector (13) the entirety of the radiation emitted by the machining zone at a certain polar angle.

9. The laser cutting device according to one of claims 1 to 8, **characterized in that** the detector arrangements (12, 13) comprise coupling points, arranged in an annular manner about the optical axis (14) and preferably along at least one circle coaxial and substantially orthogonal to the optical axis (14), for the radiation (8) in radiation guiding arrangements or other deflection arrangements, as well as detectors positioned at a distance from the coupling points or the other deflection arrangements.

10. The laser cutting device according to one of claims 1 to 9, **characterized in that** the photo detectors of the detector arrangements (13) are designed in particular as photodiodes, thermopiles or line sensors.

11. The laser cutting device according to one of claims 1 to 10, **characterized in that** the detector arrangements (13) are sensitive to at least two different wavelength ranges and/or radiation types, preferably to wavelength ranges between 0.7 and 1 µm and/or between 1.45 and 1.8 µm.

12. The laser cutting device according to one of claims 1 to 11, **characterized in that** aperture arrangements, in particular slit apertures (16), are arranged in front of the detectors (13) or in front of the intermediate elements (12).

13. The laser cutting device according to one of claims 1 to 12, **characterized in that** at least some detectors (13) and/or intermediate elements (12), in particular reflector arrangements, are inserted in the nozzle (2) or formed therein, wherein the arrangement for producing and guiding a working laser beam and the nozzle (2) are preferably detachably connected to each other.

14. The laser cutting device according to one of claims 1 to 13, **characterized in that,** in addition, a detector (19) having an observation direction parallel to the optical axis (14) is preferably positioned on the side of the focusing element (18) facing away from the machining zone, and an intermediate optical element (12) is preferably positioned between the focusing element (18) and the machining zone, wherein the intermediate element (12) deflects the observation direction (8) of the detector (19) for at least one azimuth angle β to a polar angle larger than 5° (10a) in relation to the optical axis (14) of the working laser beam (3) in the direction toward the machining zone, preferably to a polar angle of greater than or equal to 7°, in particular, to a polar angle of approximately 10° (10).

15. The laser cutting device according to claim 14, **characterized in that** the intermediate element (12) deflects the observation direction (8) of the detector (19) in a range of the azimuth angle β of at most 45° in relation to the movement direction of the nozzle (2) and counter to its movement direction toward the machining zone, wherein the intermediate element (12) deflects the radiation (8) from the machining zone at least from different polar angles, preferably also from different azimuth angles β, toward the detector (19) oriented parallel to the optical axis (14).

16. The laser cutting device according to one of claims 1 to 15, **characterized in that** the detector arrangement comprises an additional detector (19), which is arranged next to the working laser beam (3) and in front of the focusing element (18) with respect to the propagation direction of said working laser beam, and the observation direction of which extends, at least after the focusing element, obliquely to the optical axis (14) of the working laser beam (3) toward the machining zone, wherein the optical axis of the detector (19) preferably extends obliquely to the optical axis (14) of the working laser beam (3).

17. The laser cutting device according to claim 16, **characterized in that** the optical axis of the detector (19) extends in the propagation direction of the working laser beam (3) substantially parallel to the optical axis (14) of the working laser beam (3) in front of the focusing element (18) and obliquely toward the machining zone after the focusing element (18), after deflection by said element.

18. The laser cutting device according to one of claims 16 or 17, **characterized in that** the observation direction (8) of the detector arrangement (19) is oriented counter to the movement direction of the nozzle (2), wherein the detector arrangement (19) can preferably be moved in the circumferential direction about the working laser beam (3) and/or the observation direction (8) can take different polar angles (ϕ).

19. The laser cutting device according to one of claims 16 to 18, **characterized in that** the observation direction of the additional detector (19) extends at a polar angle (ϕ) of greater than or equal to 2° in relation to the optical axis (14) of the working laser beam (3), preferably at a polar angle (ϕ) between 2° and 4°, at least after the focusing cutting lens (18).

## Revendications

1. Dispositif de découpe au laser, ayant un agencement pour générer et guider un faisceau laser de travail (3), comportant une buse (2) avec une ouverture pour la sortie du faisceau laser de travail (3) vers une zone de traitement, dans lequel un axe optique (14) est défini dans l'agencement et l'agencement comprend au moins une lentille de coupe (18) focalisant le faisceau laser de travail (3), près de l'ouverture de la buse (2) et un agencement pour contrôler le processus de traitement, comprenant au moins un groupe d'agencements de détecteur (12, 13), **caractérisé en ce que** le dispositif de découpe au laser présente au moins une unité d'évaluation et **en ce que** les agencements de détecteur de chaque groupe (12, 13) sont disposés de manière annulaire autour de l'axe optique (14), de préférence le long d'au moins un cercle coaxial à l'axe optique (14) et sensiblement vertical et la direction d'observation (8) des agencements de détecteur (12, 13) est orientée au moins dans une zone partielle entre l'élément (18) focalisant le plus proche de la zone de traitement et la zone de traitement, de préférence une zone partielle plus éloignée de l'élément (18) focalisant, sous un angle polaire (ϕ₁) supérieur à 5 ° (10a) par rapport à l'axe optique (14) du faisceau laser de travail (3), de préférence sous un angle polaire supérieur ou égal à 7°, en particulier sous un angle polaire (ϕ₂) d'environ 10° (10), et **en ce que** les agencements de détecteur sont sensibles à un rayonnement caractéristique pour le processus de traitement provenant de la zone de traitement, les agencements de détecteur (12, 13) sont reliés à l'au moins une unité d'évaluation pour le calcul de caractéristiques qui sont corrélées aux différentes caractéristiques de la qualité de coupe, en utilisant des algorithmes appropriés à partir des signaux de détecteur.

2. Dispositif de découpe au laser selon la revendication 1, **caractérisé en ce qu'**au moins un élément optique intermédiaire (12), de préférence un dispositif de déviation, pour au moins un agencement de détecteur (12, 13), de préférence, la totalité des agencements de détecteurs (12, 13), est agencé entre la lentille de coupe (18) focalisante la plus proche de la zone de traitement et la zone de traitement et de préférence au moins une région de réflecteur présente de préférence plusieurs segments de miroir superposés ou une surface incurvée de forme libre.

3. Dispositif de découpe au laser selon la revendication 1 ou 2, **caractérisé en ce qu'**au moins un agencement de détecteur (13) est prévu, dont la direction d'observation (8) se situe dans une plage de l'angle d'azimut (β) de 45 ° maximum par rapport au sens de déplacement de la buse (2) et est dirigée à l'inverse du sens de déplacement sur la zone de traitement.

4. Dispositif de découpe au laser selon l'une des revendications 1 à 3, **caractérisé en ce que** chaque groupe d'agencements de détecteur (12, 13) disposé autour de l'axe optique (14) comprend au moins cinq, en particulier au moins huit agencements de détecteur (12, 13).

5. Dispositif de découpe au laser selon l'une des revendications 1 à 4, **caractérisé en ce qu'**au moins un agencement de détecteur (12, 13) comprend un détecteur (13) et au moins un agencement avec un élément optique intermédiaire (12), de préférence un agencement de déviation, dans lequel de préférence le détecteur (13) présente un faisceau de rayons d'observation en forme d'éventail (8) par rapport à l'angle polaire (ϕ) et l'agencement des éléments optiques intermédiaires (12) dévie par rapport à l'angle polaire (ϕ) de différents segments respectifs d'un faisceau de rayons d'observation particuliers en forme d'éventail (8) sur la même zone de la zone de traitement.

6. Dispositif de découpe au laser selon l'une des revendications 1 à 5, **caractérisé en ce que** plusieurs détecteurs (13) ou éléments intermédiaires (12) sensiblement dans le même angle d'azimut β sont prévus autour de l'axe optique (14) dont les directions d'observation (8) sont dirigées depuis différents angles polaires vers la zone de traitement ou **en ce qu'**un détecteur (13) ou un agencement de déviation (12) sensiblement dans le même angle d'azimutβ oscille autour de l'axe optique (14) entre différents angles polaires et la direction d'observation (8) est dirigée dans chaque cas depuis différents angles polaires vers la zone de traitement.

7. Dispositif de découpe au laser selon l'une des revendications 1 à 6, **caractérisé en ce que** plusieurs agencements de déviation (12) dans différents angles d'azimut β sont de préférence répartis de manière uniforme autour de l'axe optique (14).

8. Dispositif de découpe au laser selon la revendication 1, **caractérisé en ce que l'un** au moins des agencements de détecteur (12, 13) comprend un détecteur (13) et au moins un élément optique intermédiaire (12), de préférence un agencement de réflecteur, qui dirige l'intégralité du rayonnement émanant de la zone de traitement à un certain angle polaire vers le détecteur (13).

9. Dispositif de découpe au laser selon l'une des revendications 1 à 8, **caractérisé en ce que** les agencements de détecteur (12, 13) sont disposés de manière annulaire autour de l'axe optique (14) et comprennent des points de couplage pour le rayonnement (8), agencés de préférence le long d'au moins l'un des cercles coaxiaux à l'axe optique (14) et sensiblement verticaux dans les agencements de guidage de rayon ou d'autres agencements de déviation, ainsi que des détecteurs distants des points de couplage ou des autres agencements de déviation.

10. Dispositif de découpe au laser selon l'une des revendications 1 à 9, **caractérisé en ce que** les photodétecteurs des agencements de détecteur (13) sont conçus en particulier comme photodiodes, thermopiles ou capteurs linéaires.

11. Dispositif de découpe au laser selon l'une des revendications 1 à 10, **caractérisé en ce que** les agencements de détecteur (13) sont sensibles à au moins deux plages de longueurs d'onde et/ou types de rayonnement différents, de préférence pour des plages de longueur d'onde comprises entre 0,7 et 1 µm et/ou entre 1,45 et 1,8 µm.

12. Dispositif de découpe au laser selon l'une des revendications 1 à 11, **caractérisé en ce que** des dispositifs à diaphragme, en particulier des diaphragmes à fente (16), sont disposés devant les détecteurs (13) ou devant les éléments intermédiaires (12).

13. Dispositif de découpe au laser selon l'une des revendications 1 à 12, **caractérisé en ce qu'**au moins certains détecteurs (13) et/ou éléments intermédiaires (12), en particulier des agencements de réflecteurs, sont insérés dans la buse (2) ou formés dans celle-ci, l'agencement pour générer et guider un faisceau laser de travail et la buse (2) étant de préférence reliés ensemble de manière amovible.

14. Dispositif de découpe au laser selon l'une des revendications 1 à 13, **caractérisé en ce qu'en** outre un détecteur (19) est positionné avec une direction d'observation parallèle à l'axe optique (14), de préférence du côté opposé à la zone de traitement de l'élément focalisant (18) et un élément optique intermédiaire (12) est positionné de préférence entre l'élément (18) focalisant et la zone de traitement, dans lequel l'élément intermédiaire (12) dévie la direction d'observation (8) du détecteur (19) pour au moins un angle d'azimut β à un angle polaire supérieur à 5 ° (10a) par rapport à l'axe optique (14) du faisceau laser de travail (3) dans la direction de la zone de traitement, de préférence à un angle polaire supérieur ou égal à 7°, en particulier à un angle polaire d'environ 10° (10).

15. Dispositif de découpe au laser selon la revendication 14, **caractérisé en ce que** l'élément intermédiaire (12) dévie la direction d'observation (8) du détecteur (19) dans une plage de l'angle d'azimut β d'au plus 45 ° par rapport au sens de déplacement de la buse (2) et à l'encontre du sens de déplacement sur la zone de traitement, l'élément intermédiaire (12) déviant le rayonnement (8) depuis la zone de traitement au moins à partir d'angles polaires différents, de préférence également d'angles d'azimut différents β, sur le détecteur (19) parallèle à l'axe optique (14).

16. Dispositif de découpe au laser selon l'une des revendications 1 à 15, **caractérisé en ce que** l'agencement de détecteur comprend un détecteur (19) supplémentaire agencé à côté du faisceau laser de travail (3) et dans le sens de la propagation devant l'élément (18) focalisant, dont le sens d'observation passe au moins après l'élément focalisant de manière oblique à l'axe optique (14) du faisceau laser de travail (3) en direction de la zone de traitement, l'axe de optique du détecteur (19) étant de préférence oblique par rapport à l'axe optique (14) du faisceau laser de travail (3).

17. Dispositif de découpe au laser selon la revendication 16, **caractérisé en ce que** l'axe optique du détecteur (19) est sensiblement parallèle à l'axe optique (14) du faisceau de travail (3) dans la direction de propagation du faisceau laser de travail (3) devant l'élément (18) focalisant et après l'élément (18) focalisant, après avoir été dévié par cet élément, obliquement vers la zone de traitement.

18. Dispositif de découpe au laser selon l'une des revendications 16 ou 17, **caractérisé en ce que** la direction d'observation (8) de l'agencement de détecteur (19) est orientée dans le sens opposé à celui du déplacement de la buse (2), de préférence l'agencement de détecteur (19) étant mobile dans la direction circonférentielle autour du faisceau laser de travail (3) et/ou la direction d'observation (8) pouvant prendre différents angles polaires (ϕ).

19. Dispositif de découpe au laser selon l'une des revendications 16 à 18, **caractérisé en ce que** la direction d'observation du détecteur supplémentaire (19) au moins après la lentille de coupe (18) focalisante s'étend selon un angle polaire (ϕ) supérieur ou égal à 2 ° par rapport à l'axe optique (14) du faisceau laser de travail (3), de préférence sous un angle polaire (ϕ) entre 2 ° et 4°.
